(19) Europäisches Patentamt
European Patent Office
Office européen des brevets

(11) **EP 1 523 661 B1**

(12) **EUROPÄISCHE PATENTSCHRIFT**

(45) Veröffentlichungstag und Bekanntmachung des Hinweises auf die Patenterteilung:
**01.03.2017 Patentblatt 2017/09**

(21) Anmeldenummer: **03765023.1**

(22) Anmeldetag: **17.07.2003**

(51) Int Cl.:
*G01S 7/292* (2006.01)   *G01S 7/41* (2006.01)
*G01F 23/284* (2006.01)   *G01F 23/296* (2006.01)
*G01S 13/70* (2006.01)   *G01S 13/88* (2006.01)
*G01S 15/88* (2006.01)

(86) Internationale Anmeldenummer:
**PCT/EP2003/007779**

(87) Internationale Veröffentlichungsnummer:
**WO 2004/010093 (29.01.2004 Gazette 2004/05)**

(54) **VERFAHREN UND VORRICHTUNG ZUR BESTIMMUNG EINES ERWARTUNGSBEREICHES FÜR EIN FÜLLSTAND- UND STÖRECHO**

METHOD AND DEVICE FOR DETERMINING AN EXPECTANCY RANGE FOR A LEVEL ECHO AND A SPURIOUS ECHO

PROCEDE ET DISPOSITIF PERMETTANT DE DETERMINER UNE PLAGE DE VALEURS ESCOMPTEES POUR UN ECHO DE NIVEAU ET UN ECHO PARASITE

(84) Benannte Vertragsstaaten:
**DE FR GB SE**

(30) Priorität: **19.07.2002   US 397590 P**

(43) Veröffentlichungstag der Anmeldung:
**20.04.2005   Patentblatt 2005/16**

(73) Patentinhaber: **VEGA Grieshaber KG**
**77709 Wolfach (DE)**

(72) Erfinder: **LAUN, Robert**
**77754 Hausach (DE)**

(74) Vertreter: **Preuss, Udo**
**Maiwald Patentanwalts GmbH**
**Elisenhof**
**Elisenstrasse 3**
**80335 München (DE)**

(56) Entgegenhaltungen:
**EP-A- 0 644 404     EP-A- 0 689 679**
**DE-A1- 4 234 300     DE-A1- 19 930 822**
**US-A- 4 596 144     US-A- 5 157 639**
**US-A- 5 587 969     US-A- 5 614 911**
**US-B1- 6 237 410     US-B1- 6 298 008**

## Beschreibung

Die vorliegende Erfindung betrifft allgemein ein Verfahren zur Verbesserung der Wiedererkennung von Füllstand- und Störechos in einer Füllstandhüllkurve unter Verwendung derer, beispielsweise in der Füllstandsmesstechnik, der aktuelle Füllstand mit einem Füllstandmessgerät bestimmt wird. Insbesondere betrifft die Erfindung ein Verfahren, das unter Verwendung bestimmter mathematischer Algorithmen unter Berücksichtigung der Summe der von dem Füllstandmessgerät in einem in der Vergangenheit liegenden Zeitfenster empfangenen Echos, die normalerweise als Echo- oder als Füllstandhüllkurve bezeichnet wird, für ein bestimmtes in der Zukunft liegendes Zeitfenster Erwartungsbereiche prognostiziert, in denen zukünftig liegende Füllstand- oder Störechos zu erwarten sind.

Weiterhin betrifft die Erfindung eine Auswerteeinrichtung zur Ausführung des beschriebenen Verfahrens, insbesondere zur Analyse von in der Vergangenheit empfangenen Füllstandhüllkurven und zur Prognose von Erwartungsbereichen für in der Zukunft zu erwartende Echos. Von besonderem Interesse sind hierbei insbesondere nach dem Impulsechoprinzip arbeitende Ultraschall- oder Radarfüllstandsmessgeräte.

Darüber hinaus betrifft die Erfindung ein Computerprogramm zur Ausführung des erfindungsgemäßen Verfahrens in einem Füllstandmessgerät oder einer erfindungsgemäßen Auswerteeinrichtung sowie ein entsprechendes Computerprogrammprodukt. Unter einem solchen Computerprogrammprodukt kann jedes beliebige computerlesbare Medium wie beispielsweise eine CD-ROM, eine Diskette oder eine Wechselfestplatte, aber auch ein von einem Server ladbares Computerprogramm verstanden werden.

Im Rahmen der vorliegenden Erfindung kann als Echo allgemein der Bereich um ein lokales Maximum in einer Füllstandhüllkurve verstanden werden, der einen frei wählbaren Schwellwert überschreitet. Als Echodaten können die durch einen Analog-Digital-Wandler durch Abtasten der Füllstandhüllkurve erzeugten Daten mit beispielsweise den Dimensionen Ort, Zeit und Amplitude verstanden werden, die die Füllstandhüllkurve zu diskreten Zeitpunkten repräsentieren.

Nach dem Impulsechoprinzip arbeitende Füllstandsmessgeräte, die ein reflektiertes Echosignal abtasten, erzeugen aus dem abgetasteten Echosignal eine Reihe von Informationen zu jedem Echo in der Füllstandhüllkurve. Die Erzeugung einer Hüllkurve aus empfangenen Echosignalen ist hinlänglich bekannt, weshalb es zu dieser Technik keiner weiteren Erläuterungen bedarf (siehe beispielsweise: DE 44 07 369 C2; M. Skolnik, "Introduction to Radar Systems", 2. Auflage, 1980, McGraw-Hill; Titel: Peter Devine, "Radar level measurement - the users guide", VEGA Controlls Ltd., 2000, ISBN 0-9538920-0-X).

## HINTERGRUND DER ERFINDUNG

Bei nach dem Impulsechoprinzip arbeitenden Radar- oder Ultraschallfüllstandssensoren wird der Füllstand aus einem bestimmten Echo, das in der Füllstandhüllkurve als den Füllstand repräsentierend detektiert werden kann, ermittelt. Dabei wird die aus einzelnen Echos bestehende Füllstandhüllkurve von einem Analog-Digital-Wandler abgetastet, wodurch die empfangene Füllstandhüllkurve einem Mikroprozessor oder Mikrocontroller zur weiteren Verarbeitung zur Verfügung gestellt wird. Die empfangene Füllstandhüllkurve umfasst jedoch nicht nur das Füllstandecho, das für den aktuellen Füllstand repräsentativ ist, sondern umfasst weiterhin häufig auch Störechos, die beispielsweise durch Mehrfachreflexionen oder durch Reflektion an Behältereinbauten verursacht werden.

Um in einer derartigen Füllstandhüllkurve nur das tatsächliche Füllstandecho zu erkennen bzw. die Störreflexionen auszufiltern, wird eine Vorverarbeitung der Füllstandhüllkurve erforderlich. Bei dieser Vorverarbeitung der Füllstandhüllkurve werden die Echos mit Hilfe Verfahren der Bildverarbeitung, wie beispielsweise Filterung, Mittelung, Kantenerkennung, Selektion und Klassifikation aufgearbeitet. Die so aufbereitete Füllstandhüllkurve wird anschließend nach Echos, die für das Füllgut repräsentativ sind, bzw. nach Störreflexionen untersucht und analysiert. Mit Hilfe der so aufbereiteten Echos, die beispielsweise Daten, wie Ort, Amplitude und Breite der Echos umfassen, kann dann eine Entscheidung getroffen werden, welches Echo für den tatsächlichen Füllstand repräsentativ ist und welches nicht. Wird ein Echo als für den aktuellen Füllstand repräsentativ detektiert, so entspricht der Ort des analysierten Echos dem gesuchten Füllstandswert.

Da, wie bereits ausgeführt, eine empfangene Füllstandhüllkurve stets auch Störechos umfassen kann, müssen diese sicher erkannt werden, um nicht aus einem solchen fälschlicherweise den Füllstand zu bestimmen. Ein bekanntes Kriterium, zur Beurteilung, ob ein Echo ein Füllstand oder ein Störecho ist, besteht darin, dass als Füllstandecho stets das Echo verwendet wird, das die größte Amplitude aufweist. Dieses Kriterium ist jedoch als unsicher zu beurteilen, da beispielsweise durch ein im Signalausbreitungsweg befindlicher Störgegenstand, der sich näher am Empfänger des Füllstandmessgerät befindet als der aktuelle Füllstand, in aller Regel ein stärkeres Echo hervorrufen wird, als durch den Füllstand selbst. Somit sollte dieses Kriterium niemals alleine, sondern immer nur in Verbindung mit weiteren Bedingungen kombiniert angewendet werden.

So ist aus der DE 42 23 346 A1 eine Anordnung und ein Verfahren zur berührungslosen Abstandsmessung mit Hilfe von Impuls-Echo-Signalen bekannt. Diese Anordnung vergleicht ein Impuls-Echo-Signal zur exakteren Ermittlung der Signallaufzeiten mit in einem neuronalen Netzwerk abgespeicherten Signalmustern. Es soll insbesondere die Signallaufzeit auch dann exakt zu ermitteln sein, wenn das Impuls-Echo-Signal in starkem Maße mit Stör-Echo-Signalen überlagert ist. Mit Hilfe von Parallel-Datenverarbeitungs-Techniken und des assoziativen Vergleichs des empfangenen Signals mit erlernten und im neuronalen Netzwerk abgespeicherten Mustern ist es weit besser als bisher möglich, die verborgene Information zu regenerieren und damit sehr korrekte Füllstandsdaten zu ermitteln. Durch Anwendung der neuronalassoziativen Signalverarbeitung ist eine komplexe holistische Auswertung des Impuls-Echo-Profils möglich. Hierbei kann die Messstrecke selbst als intrinsisches Referenzelement benutzt werden, indem Kompensationsgrößen von vorhandenen Störechos abgeleitet werden.

Aus der DE 42 34 300 A1 ist ein Füllstandmessverfahren bekannt, bei dem die bei einer Befüllung oder Entleerung des Behälters auftretende, durch sich verändernde Signallaufzeit hervorgerufene zeitliche Verschiebung des Nutzechos erfasst wird und dieses Kriterium ausgewertet wird, um das Nutzecho von Störechos unterscheiden zu können. Es wird hier also zur Unterscheidung eines Nutzechos von einem Störecho überprüft, ob in aufeinanderfolgenden Signalverläufen Echoimpulse enthalten sind, die sich zeitlich kontinuierlich verschieben. Bei Erfassung solcher Echoimpulse werden diese als Nutzecho eingestuft. Der Grundgedanke der hieraus bekannten Verfahrensweise besteht darin, dass Signallaufzeiten bei Reflexion an den Behälterinnenwänden in zeitlicher Hinsicht stabil sind, so dass die Lage solcher Störimpulse auch bei wiederholten Messungen innerhalb des Empfangsbefehls unveränderlich ist. Diese zeitliche Lagestabilität innerhalb des Empfangsprofils trifft normalerweise auch für das direkt von der Füllgutoberfläche reflektierte Nutzecho zu.

Andere Verfahren zur Füllstandechoerkennung greifen auf in der Vergangenheit empfangene Echoverhältnisse zurück und vergleichen diese einzeln mit den Echos der aktuell empfangenen Füllstandhüllkurve. Bei diesen Verfahren werden die empfangenen Echos einer bereits empfangenen Füllstandhüllkurve in einem Speicher abgelegt, um diese anschließend einzeln mit den Daten aus einer nächsten Füllstandhüllkurve vergleichen zu können. Beispielsweise ist aus der EP 0 689 679 B1 ein Verfahren bekannt, das die aktuell empfangenen Echos mit den bereits in der Vergangenheit empfangenen Echos nach einer Differenzwertbildung ins Verhältnis setzt und daraus unter Verwendung einer Fuzzy-Auswertungseinheit eine Wahrscheinlichkeit berechnet, mit der ein Echo ein Füllstandecho ist. Problematisch an dieser Vorgehensweise ist zum einen, dass sich dieses Verfahren nur eignet um Mehrfachechos auszufiltern. Zum andern kommt vor allem hinzu, dass mit dem in der EP 0 689 679 B1 offenbarten Verfahren nur ein Vergleich zwischen Echos zu zwei Zeitpunkten möglich ist. Eine Trendbeobachtung des Füllstandechos und eine Trendprognose sowie eine Zuordnung zu Trendbereichen ist nicht möglich.

Ein weiteres Problem besteht darin, dass bei dem Vergleich der neu empfangenen Echos mit den Echos bereits abgespeicherter Füllstandhüllkurven häufig Zuordnungsprobleme entstehen, da sich die aktuell empfangenen Echos über die Zeit ändern können, obwohl sie von jeweils stets der gleichen Füllstandsoberfläche als Reflektor reflektiert werden. Derartige Probleme entstehen beispielsweise durch die Bildung von Staub bei der Befüllung oder durch das Nachrutschen des Füllgutes beim Entleeren von Schüttgutbehältern.

Um jedoch eine sichere Füllstandsmessung zu gewährleisten, ist es erforderlich, dass ein einmal erkannter Füllstand immer wieder anhand der aktuell empfangenen Echos erkannt wird, und dass nicht etwa fälschlicherweise eine Störreflexion als für den Füllstand repräsentativ gewertet wird. Wenn beispielsweise ein Füllstandsecho zeitweise nicht erfassbar ist, muss dies erkannt werden, so dass es nicht zu einer Zuordnung kommt, bei der beispielsweise ein Störecho als Füllstandsecho identifiziert wird. Diese häufig problematische Zuordnung von Echos aus vergangenen Füllstandhüllkurven zu Daten einer aktuellen Füllstandhüllkurve erfolgt dadurch, dass, wie bereits beschrieben, Daten von aktuellen Echos mit den Daten von bereits empfangenen Echos verglichen werden. Entspricht bei einem derartigen Vergleich etwa mit Hilfe einer Schwellenwertkurve oder einer Maximumsuche ein aktuelles Echo einem bereits empfangenen Echo, so wird angenommen, dass sich diese Echos einander entsprechen, wodurch das neue Echo als wahres Echo identifiziert wird. Unterscheidet sich die Anzahl der einer bereits empfangenen Füllstandhüllkurve enthaltenen Echos gegenüber der Anzahl der aktuellen Echos, so besteht die Gefahr, dass dabei Zuordnungsfehler auftreten. Ebenso besteht die Gefahr einer Fehlzuordnung, wenn mehrere Echos in einem engen Bereich auftreten.

Die US 5 157 639 zeigt einen Ultraschalldetektor, der benutzt wird um das Niveau einer Flüssigkeit in einer Leitung zu erfassen.

Die US 4 596 144 zeigt ein akustisches Entfernungsmesssystem. In einer statistischen Datenbank werden Echoprofile gespeichert. Basierend auf den gespeicherten Profilen wird ein Nutz-Echo ermittelt.

## DARSTELLUNG DER ERFINDUNG

Die vorliegende Erfindung ist in den beigefügten Ansprüchen definiert. Ein der vorliegenden Erfindung zugrunde liegende technische Problem besteht darin, ein Verfahren zur Verfügung zu stellen, mit dem die beschriebenen Zuordnungsprobleme verringert und somit insbesondere eine sicherere Erfassung und Messung von Füllständen, insbesondere bei einer Befüllung oder Entleerung gewährleistet werden kann. Insbesondere soll eine Möglichkeit geschaffen werden, die es ermöglicht, dass ein nach dem Impulsechoprinzip arbeitendes Radar- oder Ultraschallfüllstandmessgerät ein einmal erkanntes Echo - sei es ein Füllstand- oder ein Störecho - auch in in Zukunft liegenden Füllstandhüllkurven mit einer vorbestimmbaren Wahrscheinlichkeit also solches wieder erkennt.

Gemäß einem ersten Aspekt der vorliegenden Erfindung wird dieses technische Problem durch ein Verfahren zur Bestimmung zumindest eines Erwartungsbereiches für ein von einem Ultraschall- oder Radarfüllstandmessgerät erzeugtes Füllstand- oder Störecho gelöst, wobei der zumindest eine Erwartungsbereich unter Berücksichtigung des zeitlichen Verhaltens von zumindest zwei in der Vergangenheit liegenden Füllstand- oder Störechos bestimmt wird.

Gemäß einem weiteren Aspekt wird das der Erfindung zu Grunde liegende Problem durch ein Füllstandmessgerät mit einer Auswerteeinheit zur Bestimmung zumindest eines Erwartungsbereiches für ein von einem Füllstandmessgerät erzeugtes Füllstand- oder Störecho gelöst, wobei der zumindest eine Erwartungsbereich unter Berücksichtigung des zeitlichen Verhaltens von zumindest zwei in der Vergangenheit liegenden Füllstand- oder Störechos bestimmt wird.

Gemäß einem dritten Aspekt wird durch eine Auswerteeinrichtung zur Bestimmung zumindest eines Erwartungsbereiches für ein von einem Füllstandmessgerät erzeugtes Füllstand- oder Störecho, wobei der zumindest eine Erwartungsbereich unter Berücksichtigung des zeitlichen Verhaltens von zumindest zwei in der Vergangenheit liegenden Füllstand- oder Störechos bestimmt wird, ebenfalls das der Erfindung zu Grunde liegende Problem gelöst.

Darüber hinaus löst ein Computerprogramm sowie ein entsprechendes Computerprogrammprodukt zur Bestimmung zumindest eines Erwartungsbereiches für ein von einem Ultraschall- oder Radarfüllstandmessgerät erzeugtes Füllstand- oder Störecho das der Erfindung zu Grunde liegende Problem, indem das Computerprogramm Anweisungen aufweist, mit denen zumindest einen Erwartungsbereich unter Berücksichtigung des zeitlichen Verhaltens von zumindest zwei in der Vergangenheit liegenden Füllstand- oder Störechos bestimmt werden kann.

Der Erfindung liegt beispielsweise der Gedanke zugrunde, erstmals bei der Echoverarbeitung derart auf mathematische Algorithmen zurückzugreifen, dass unter Berücksichtigung bereits in der Vergangenheit empfangener Füllstandhüllkurven und deren Echos Aussagen über die in Zukunft während einer Befüllung oder Entleerung zu erwartenden Echos einer Füllstandhüllkurve gemacht werden können. Durch eine derartige Vorgehensweise ist es erstmalig beispielsweise möglich, mit einer vorbestimmbaren Wahrscheinlichkeit eine Aussage darüber zu treffen, ob ein in einer aktuell empfangenen Füllstandhüllkurve liegendes Echo ein Füllstand- oder ein Störecho ist.

Ausgangspunkt des vorliegenden Verfahrens ist beispielweise eine durch Analog-Digitalwandlung abgetastete Füllstandhüllkurve. Nach diesem ersten Verfahrensschritt steht die empfangene Füllstandhüllkurve in digitalisierter Form beispielsweise mit den Dimensionen Ort, Zeit und Amplitude zur Verarbeitung durch einen Mikroprozessor oder Mikrokontroller zur Verfügung. Nach dieser Analog-Digitalwandlung werden die Amplituden der Echos der Füllstandhüllkurve in Abhängigkeit von Ort und Zeit in einem zweidimensionalen Array oder einer Matrix gespeichert. Im Falle der drei erfassten Dimensionen Ort $s$, Amplitude $A$ und Zeit $t$ ist jeder Zeit $t$ und jedem Ort $s$ eine bestimmte Amplitude $A$ zugeordnet, d.h. $A(t,s)$. Wird durch das erfasste Echo eine oder mehrere weitere Dimensionen erfasst, wie beispielsweise ein Druck oder eine weitere physikalische Kenngröße, so werden entsprechend die Echodaten einem vier- oder mehrdimensionalen Array bzw. einem Tensor abgespeichert. Geht man von einem Echo mit den Dimensionen Ort, Amplitude, Zeit und beispielsweise Druck aus, so hieße dies, dass jeder Zeit $t$ und jedem Ort $s$ eine bestimmte Amplitude $A$ sowie ein bestimmter Druck $p$ zugeordnet sind:

$$t, s \longrightarrow A, p$$

Die Größe des Arrays, in das die Echodaten bei dem Verfahren geschrieben werden, ist hierbei gemäß einem Ausführungsbeispiel der vorliegenden Erfindung variabel und lässt sich dynamisch durch das Verfahren an verschiedene Parameter, wie beispielsweise Befüllungsgeschwindigkeit oder Zeitfenstergröße anpassen. Die Größe des Zeitfensters entspricht dabei der Zeit, in der in der Vergangenheit liegende Füllstandskurven für die Prognose von in der Zukunft liegenden Echos berücksichtigt werden sollen.

Im Folgenden wird nun das weitere Verfahren anhand der in einem Echo erfassten Dimensionen Ort, Amplitude und Zeit weiter erläutert, wobei, wie bereits erläutert, sich das erfindungsgemäße Verfahren auch auf eine vierte und weitere Dimensionen analog übertragen lässt.

Bei dem Verfahren wird jede Füllstandhüllkurve, die von einem Füllstandmessgerät in äquidistanten Zeitabständen aufgenommen wird, spalten- oder zeilenweise in Abhängigkeit von Zeit und Ort in das Array geschrieben. Jede Füllstandhüllkurve entspricht hierbei einer Zeile bzw. einer Spalte. Die Amplituden der Füllstandhüllkurve werden somit spalten- oder zeilenweise in Abhängigkeit des Ortes und der Zeit in das Array geschrieben, bis das Array, das eine vorbestimmte Größe aufweist, mit Echos von Füllstandhüllkurven gefüllt ist.

Es ist ebenfalls auch möglich, anstatt jede von einem Füllstandmessgerät registrierten Füllstandhüllkurve in das Array zu schreiben, nur jede zweite, dritte oder ganz allgemein, nur jede $n$-te Füllstandhüllkurve in das Array aufzunehmen, wobei gilt $n \in \mathbb{N}^*$. Dies erweist sich vor allem bei sehr langsamen Füllstandänderungen als sehr vorteilhaft, da dadurch bei dem erfindungsgemäßen Verfahren Speicher- und Rechnerkapazität eingespart werden kann.

Wenn sich bei einer Befüllung oder Entleerung eines Behälters der Füllstand ändert, so variieren damit zwangsweise die damit verbundenen Dimension des Ortes des empfangenen Echos, welche ihrerseits wiederum eine Funktion der Laufzeit des Echosignals ist. In der Ort-Zeit-Ebene des Arrays, in dem die Füllstandhüllkurven bzw. die Echos mit ihren Echodaten abgespeichert werden, bedeutet dies, dass sich der Ort der Echoamplituden über die Zeit verändert. Analysiert man diesen Zusammenhang genauer, so ist bei einer kontinuierlichen Befüllung oder Entleerung eines Behälters mit über die Behälterhöhe konstantem Querschnitt festzustellen, dass dieser Zusammenhang linear ist. Ist dagegen die Querschnittsfläche des Behälters über die Höhe nicht konstant, so ergeben sich andere mathematische Zusammenhänge, die sich jedoch ebenfalls mit mathematischen Funktionen beschreiben lassen. Sind jedoch die Zeitfenster genügend klein gewählt, und befinden sich darüber hinaus auch die Echoimpulse zur Erzeugung der Füllstandhüllkurven in genügend kleinen zeitlichen Abständen, so ergeben sich in erster und hinreichend genauer Näherung für den Verlauf des Füllstandes lineare Geraden, um die die tatsächlich ermittelten Echos jedoch leicht streuen.

Sobald das Array mit in der Vergangenheit empfangenen Füllstandhüllkurven bzw. den entsprechenden Echos gefüllt ist, können die Erwartungsbereiche, in denen in einem nächsten Zeitfenster Füllstand- bzw. Störechos erwartet werden können, bestimmt werden. Hierzu wird das Array auf bestehende Korrelationen der empfangenen Echos zwischen Ort und Zeit mit Hilfe verschiedener, auf mathematischen Algorithmen basierenden Methoden zur Bildverarbeitung, wie beispielsweise der Filterung, Mittelung oder Selektion, untersucht. Mit Hilfe dieser Methoden werden in jeder Füllstandhüllkurve die Maximalwerte jedes darin befindlichen Echos ermittelt. Diese Maximalwerte dienen in einem weiteren Schritt dazu, um unter Verwendung eines Kantenerkennungsalgorithmus den zeitlichen Verlauf jedes Echos von in zeitlich aufeinander folgenden Füllstandhüllkurven zu erfassen. Unter Verwendung eines derartigen Kantenerkennungsalgorithmus lassen sich beispielsweise in einer visualisierten Darstellung des Arrays "Kanten" erkennen, die die Veränderung jedes Echos über die Zeit erkennen lassen.

In solch einer visualisierten Array-Darstellung, in der die Echoamplituden in Abhängigkeit ihres Ortes und der jeweiligen Zeit in dem Array eingetragen werden, bedeutet dies, dass sich zu jedem Echo in dem Array zugehörige Geraden herauskristallisieren. Verändert sich hierbei ein Echo in dem Array über die Zeit nicht oder nur wenig, d.h. die Steigung der entsprechenden Geraden ist etwa Null, so ist dies entweder ein Störecho, das von einem stationären Behältereinbauteil reflektiert wird oder es handelt sich um ein Füllstandsecho, wobei sich der Füllstand jedoch nicht ändert. Weist eine Gerade hingegen eine positive oder negative Steigung auf, so ist davon auszugehen, dass diese Gerade dem Füllstand entspricht, bzw. dass diese Gerade Mehrfachechos des Füllstandes entspricht. Diese Mehrfachechos werden dadurch erzeugt, dass ein Impuls, bevor er von dem Füllstandgerät wieder empfangen wird, möglicherweise mehrfach zwischen Füllstand und Behälterdecke reflektiert wird, wodurch diese Mehrfachechos eine längere Laufzeit aufweisen, und somit fälschlicherweise einen geringeren Füllstand vortäuschen.

Da für die weitere Verarbeitung jedoch lediglich die Gerade von Interesse ist, die den wahren Füllstand repräsentiert, müssen die Geraden der Mehrfachechos ausgefiltert werden. Dies geschieht beispielsweise in einem weiteren Verfahrensschritt, in dem diese Geraden mit Hilfe logischer Fuzzy-Abfragen beispielsweise unter Verwendung des in der EP 0 689 679 B1 beschriebenen Verfahrens ausselektiert werden. Nach dieser Selektion umfasst das Array lediglich noch die Spur der Geraden, die für den Füllstand repräsentativ ist. Eine derartige Ausfilterung der Mehrfachechos ist jedoch nicht zwingend erforderlich, da es mit Hilfe des erfindungsgemäßen Verfahrens ebenfalls möglich ist, die in der Zukunft zu erwartenden Mehrfachechos den entsprechenden prognostizierten Erwartungsbereichen zuzuordnen, so dass es nicht zu einer Fehlzuordnung kommen kann. Außerdem weisen Mehrfachechos eine dem Betrag nach größere Steigung auf als das Füllstandecho.

Um nun Rückschlüsse auf die in Zukunft zu erwartenden Echos machen zu können, müssen die in dem in der Vergangenheit liegenden Zeitfenster bereits empfangenen Echos, die in dem Array gespeichert sind, derart ausgewertet werden, dass daraus auf die in Zukunft zu erwartenden Echos geschlossen werden kann. Da man annehmen kann, dass zukünftige Echos sich an dem Verhalten vergangener Echos orientieren, geschieht dies, indem Erwartungsbereiche am Ende der in dem Array aufgefundenen Geraden bestimmt werden, in denen Füllstand- bzw. Störechos in der Zukunft erwartet werden können.

Dieser Blick in das in Zukunft liegende Zeitfenster kann unter Verwendung bestimmter mathematischer Näherungsverfahren und Algorithmen, wie beispielsweise der Regressionsanalyse ermöglicht werden. Geht man bei dieser Prognose, wie bereits erwähnt, von linearen Verhältnissen aus, so reduziert sich die Problemstellung auf eine lineare Regression. Anstelle der linearen Regression lässt sich jedoch auch jedes andere mathematische Näherungsverfahren, wie beispielsweise ein Polynominterpolations- oder ein Spline-Interpolationsverfahren anwenden. Um den Erwartungsbereich in einem in der Zukunft liegenden Zeitfenster zu prognostizieren, werden erfindungsgemäß diese oder ähnliche Verfahren angewendet, um den zeitlichen Verlauf einer Näherungskurve, z.B. einer Geraden, wie sie sich bei nicht verändernden Bedingungen in dem in Zukunft liegenden Zeitfenster fortsetzen müsste, zu bestimmen. Um diese so prognostizierten Geraden müssten in dem in Zukunft liegenden Zeitfenster bei sich nicht ändernden Füllstandsbedingungen die zu erwartenden Füllstand- bzw. Störechos streuen. Um eine quantitative Aussage darüber treffen zu können, ob ein in Zukunft um eine prognostizierte Gerade streuendes Echo tatsächlich dieser Geraden bzw. dem zugehörigen aus der Vergangenheit bekannten Echo zugerechnet werden darf, wird in einem weiteren Verfahrensschritt ein(e) Abweichungsdistanz (bzw -maß), wie beispielsweise die Standardabweichung der in dem aktuellen Array gespeicherten Echos gegenüber der bestimmten Ausgleichsgeraden berechnet. Ein Vielfaches dieses so berechneten Abweichungsmaßes lässt sich dann zur Bestimmung des Streubereichs um die in dem zukünftigen Zeitfenster liegende Gerade verwenden, indem mit einer vorausbestimmbaren Wahrscheinlichkeit hineinfallende Echos tatsächlich diesem so erzeugten Erwartungsbereich zugeordnet werden dürfen.

Die so berechneten Erwartungsbereiche liegen von dem aktuell ausgewerteten Array aus gesehen in der Zukunft und definieren die Bereiche, in denen in einem in Zukunft liegenden Zeitfenster liegende Echos einem bestimmten, in der Vergangenheit erkannten Echo mit einer vorbestimmbaren Wahrscheinlichkeit zugerechnet werden dürfen. In dem als breite des Echobereichs die Standardabweichung oder ein Vielfaches der Standardabweichung verwendet wird, kann man mit einer vorbestimmbaren Wahrscheinlichkeit davon ausgehen, dass die in einem so definierten Erwartungsbereich zum Liegen kommende Echos tatsächlich den in der Vergangenheit als Füllstand- oder Störecho erkannten Echos entsprechen. Selbstverständlich kann als Streubereich um eine prognostizierte Gerade auch jede beliebige Distanz bzw. Breite angenommen werden, jedoch lassen sich in diesem Falle keine Rückschlüsse mehr auf die Wahrscheinlichkeit machen, mit denen ein in einem Erwartungsbereich zum Liegen kommendes Echo tatsächlich diesem zugewiesen werden darf oder nicht.

Das bisher beschriebene erfindungsgemäße Verfahren zielt darauf ab, die Erwartungsbereichbestimmung nicht mit jeder neu registrierten Füllstandhüllkurve erneut durchzuführen, sondern die Erwartungsbereichsbestimmung erst dann erneut auszuführen, wenn das Array mit in der Zukunft liegenden Füllstandhüllkurven bzw. den entsprechenden Echodaten erneut aufgefüllt worden ist.

Eine weitere beispielhafte Ausführungsform des Verfahrens gemäß der vorliegenden Erfindung sieht es nun vor, nach jeder neu registrierten Füllstandhüllkurve einen neuen Erwartungsbereich zu bestimmen. Alternativ ist es auch möglich, nach jeder $n$-ten ($n \in \mathbb{N}^{*}$) registrierten Füllstandhüllkurve einen neuen Erwartungsbereich zu bestimmen. Hierzu ist es erforderlich, dass eine Umspeicherung der Füllstandhüllkurven in dem Array erfolgt, indem die "ältesten" $n$ Füllstandhüllkurven gelöscht werden, die verbleibenden Füllstandhüllkurven um $n$ Spalten verschoben werden, und die so frei werdenden Spalten mit den neu registrierten $n$ Füllstandhüllkurven beschrieben werden. Diese Ausführungsform ist als besonders vorteilhaft zu beurteilen, da dadurch sehr genau bei der Erwartungsbereichsbestimmung dem in der jüngsten Vergangenheit liegenden Füllstandverlauf Rechnung getragen werden kann.

Insgesamt kann sich die vorliegende Erfindung als besonders vorteilhaft dadurch erweisen, dass durch das erfindungsgemäße Verfahren nicht mehr ein Einzelvergleich der aktuell empfangenen Echos mit den bereits in der Vergangenheit empfangenen Echos erfolgt, sondern es werden die aktuell empfangenen Echos einem Erwartungsbereich zugeordnet, in dem zukünftig zu erwartende Echos mit einer vorbestimmten Wahrscheinlichkeit vermutet werden können. Hierdurch können fehlerhafte Messergebnisse weitestgehend ausgeschlossen werden.

Ein weiterer Vorteil der Erfindung kann darin bestehen, dass es mit dem beschriebenen Verfahren nicht nur möglich ist, Erwartungsbereiche zu definieren, in denen Füllstandechos erwartet werden können, sondern es ist ebenso möglich, Erwartungsbereiche zu definieren, in denen mit einer bestimmten Wahrscheinlichkeit Störechos zu erwarten sind. Um ein Störecho mit höchster Sicherheit auch als solches zu erkennen, steht somit neben dem Kriterium, dass sich Störechos auf horizontalen Geraden befinden, ein weiteres Kriterium zur Verfügung, nämlich, dass bestimmte Störechos nur in bestimmten Bereichen erwartet werden können.

Konnten im einen in Zukunft liegenden Zeitfenster auftretende Echos der Erwartungsbereich für das Füllstandecho zugeordnet werden, so wird unter Verwendung dieser Echos der aktuelle Füllstand bestimmt. Echos hingegen, die keinem der Erwartungsbereiche für den Füllstand oder ein Störecho zugeordnet werden können, werden verworfen und gehen somit nicht in die Prognose für weiter in Zukunft liegende Erwartungsbereiche ein. Steigt oder fällt der Füllstand in dem in Zukunft liegenden Zeitfenster schneller als im aktuellen Zeitfenster, so wird diese Änderung der Befüllungsgeschwindigkeit durch Anpassung der Steigung des nächsten Erwartungsbereichs angepasst, so dass durch das Verfahren stets den aktuellen Änderungen Rechnung getragen wird.

Wie bereits beschrieben, werden die Echos mit ihren Dimensionen Ort, Amplitude und Zeit in einem zweidimensionalen Array oder einer Matrix abgelegt. Bei der bisher durchgeführten Betrachtung reduzierte sich dabei die Analyse der Echos jedoch im Prinzip lediglich auf die Dimensionen Ort und Zeit. Da jedoch jedem Ort und jeder Zeit eine bestimmte Echoamplitude zugeordnet ist, kann eine weitere Klassifikation der Echos aufgrund ihrer Amplituden erfolgen. In einer grafischen Darstellung würde dies bedeuten, dass die visualisierten grafischen Verläufe des Füllstandechos eine bestimmte Lage in einem dreidimensionalen Koordinatensystem einnehmen würden, so dass einem jeden Echo zu einer bestimmten Zeit und einem bestimmten Ort eine zu erwartende Amplitude zugewiesen werden würde.

Da jede Amplitude durch einen bestimmten Wert repräsentiert wird, ist es möglich, die Echos in der Ebene als Geraden visualisiert darzustellen, wobei die Amplituden, die zu einem bestimmten Zeitpunkt und einem bestimmten Ort gehören, durch einen von dem Amplitudenwert bestimmten Farb- oder Grauwert repräsentiert werden.

Ein entsprechendes Füllstandmessgerät sowie eine separate Auswerteeinrichtung zur Bestimmung von Erwartungsbereichen in in Zukunft liegenden Zeitfenstern, denen zukünftige Echos zugeordnet werden können, umfasst eine Auswerteeinheit mit einem Speicher, in dem eine vorbestimmbare Anzahl von Füllstandhüllkurven mit den Dimensionen Ort, Zeit und Amplitude in einem zweidimensionalen Array oder einer Matrix abgespeichert werden. Weiterhin umfasst die Auswerteeinheit des Füllstandsmessgerätes bzw. der Auswerteeinrichtung eine Signalverarbeitungseinheit, die mit Hilfe bestimmter mathematischer Algorithmen, wie beispielsweise der Regressionsanalyse oder der Polyminterpolation die Geradenverläufe der in dem Array abgespeicherten Echos ermittelt. Die Signalverarbeitungseinheit dient weiterhin dazu, um ein Abweichungsmaß der jeweiligen Echos von den berechneten Näherungsgraden zu bestimmen, woraus für das in Zukunft liegende Zeitfenster die Breite der Erwartungsbereiche bestimmt wird, die sich um die prognostizierte Näherungsgeraden ergeben.

Ein entsprechendes Computerprogramm zur Bestimmung von Erwartungsbereichen von in Zukunft liegenden Füllstandechos führt das erfindungsgemäße Verfahren aus, und lässt sich beispielsweise in einem Auswertprogramm zum Auswerten generierter Hüllkurven als Subroutine implementieren. Derartige Auswertprogramme sind beispielsweise unter der Marke "Echofox®" der Firma VEGA Grieshaber KG, Deutschland, bekannt. Dementsprechend kann das erfindungsgemäße Verfahren sowie das entsprechend arbeitende Computerprogramm entweder in einer separaten Auswerteeinrichtung implementiert werden oder, wenn es gewünscht ist, unmittelbar in einem Füllstandmessgerät integriert werden. Füllstandmessgeräte der hier interessierenden Art sind im Übrigen alle bekannten Füllstandmessgeräte, die ein reflektiertes Echosignal abtasten, das heißt, eine Füllstandhüllkurve generieren. Derartige Füllstandmessgeräte sind beispielsweise Ultraschallfüllstandmessgeräte oder Radarfüllstandmessgeräte, insbesondere sogenannten Impulsradarfüllstandmessgeräte.

Im Folgenden werden die Ausdrücke "Annäherungsgerade", "Trendgerade", und "Ausgleichgerade" synonym verwendet.

## KURZE BESCHREIBUNG DER ZEICHNUNGEN

Im Folgenden ist zur weiteren Erläuterung und zum besseren Verständnis der vorliegenden Erfindung ein Ausführungsbeispiel der Erfindung unter Bezugnahme auf die beigefügten Zeichnungen näher beschrieben. Es zeigt:

Fig. 1      eine schematische Seitenansicht eines im Deckenbereich eines Behälters eingebauten Füllstandmessgerätes;

Fig. 2      eine schematische Seitenansicht eines Füllstandmessgerätes;

Fig. 3      eine schematische Seitenansicht einer Auswerteeinrichtung;

Fig. 4      eine durch einen Analog-Digital-Wandler abgetastete Füllstandhüllkurve;

Fig. 5      einen Auszug eines Arrays mit abgespeicherten Füllstandhüllkurvendaten;

Fig. 6      ein Flussdiagramm, das die Schritte zur Erwartungsbereichbestimmung veranschaulicht;

Fig. 7      ein Array mit darin abgespeicherten Füllstandhüllkurven;

Fig. 8      das Array der Fig. 7, auf das verschiedene Methoden der Bildverarbeitung angewendet wurden;

Fig. 9      ein Array mit darin abgespeicherten Echoamplituden;

Fig. 10    das Array der Fig. 9 nach einer Kantenerkennung;

Fig. 11    ein Grauwertbild eines Arrays mit Echodaten;

Fig. 12    ein Grauwertbild des Arrays der Fig. 11 nach der Anwendung von Methoden der Bildverarbeitung;

Fig. 13    in einer grafischen Darstellung mehrere, in seitlicher Abfolge nacheinander gestaffelte Arrays mit prognostizierten Erwartungsbereichen für die Zukunft.

In allen Zeichnungen hinweg sind gleiche Einrichtungen und Einheiten mit übereinstimmenden Bezugszeichen gekennzeichnet.

## BESCHREIBUNG EINES BEVORZUGTEN

## AUSFÜHRUNGSBEISPIELS DER ERFINDUNG

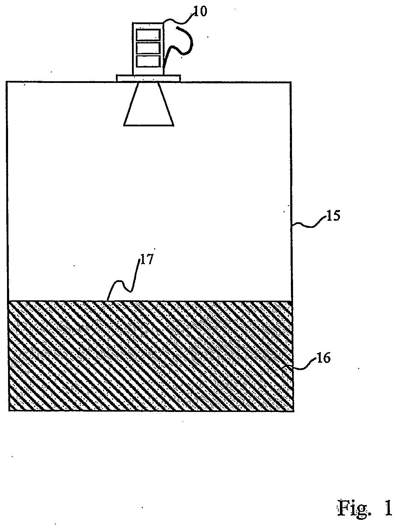

Aus der schematischen Darstellung gemäß der Fig. 1 ist ersichtlich, dass ein Füllstandmessgerät 10 im Deckenbereich eines Behälters 15 montiert ist. In dem Behälter 15 befindet sich ein Füllgut 16, Schüttgut oder Flüssigkeit, das eine Füllgutoberfläche 17 ausbildet.

Das im Behälter 15 montierte Füllstandmessgerät 1 umfasst ein Gehäuse 12 und eine Antenne 13. Es ist über ein Kabel 14, insbesondere eine sog. 4-20 mA-Zweidrahtschleife, an eine hier nicht dargestellte Stromversorgungs- und Kommunikationseinrichtung angeschlossen.

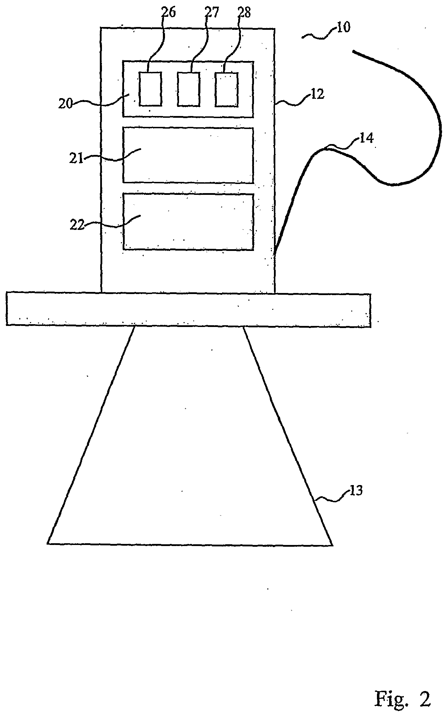

In der äußerst schematischen Darstellung gemäß der Fig. 2 ist das Füllstandmessgerät 10 mit einer Auswerteeinheit 20, einer Sendeeinheit 21 und einer Empfängereinheit 22 dargestellt. Mit der Sendeeinrichtung 21 werden kurze Radarimpulse oder Ultraschallimpulse über die Antenne 13 in Richtung der Füllgutoberfläche 17 ausgesendet. An der Füllgutoberfläche 17 werden diese Signale reflektiert und über die gleiche Antenne 13 empfangen. In der Empfängereinrichtung 22 werden diese gemäß dem Stand der Technik weiter verarbeitet und in der Auswerteeinrichtung 20 ausgewertet. Hierzu wird in bekannter Weise eine Füllstandhüllkurve aus den einzelnen Echosignalen gebildet. Diese Füllstandhüllkurve wird dann wiederum mittels mathematischer Methoden in der Auswerteinheit 20 näher untersucht. Hierzu umfasst die Auswerteinheit 20 einen Speicher 26, eine Bildverarbeitungseinheit 27 sowie eine Signalverarbeitungseinheit 28. Vor allem wird die Füllstandhüllkurve unter Anwendung des erfindungsgemäßen Verfahrens be- und ausgewertet, insbesondere wie es im folgenden beschrieben wird.

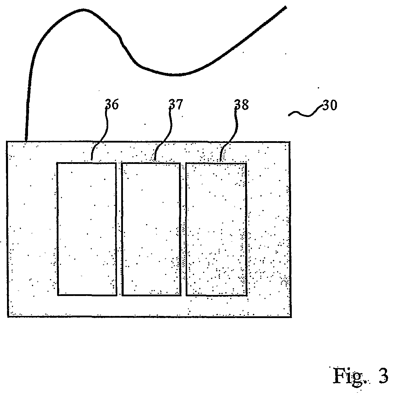

Anstatt der Auswertung der Signale in der Auswerteeinrichtung 20 des Füllstandmessgerätes 10, kann die Auswertung ebenfalls mit der in Fig. 3 dargestellten Auswerteeinrichtung 30 erfolgen. Die Fig. 3 zeigt eine schematischen Darstellung einer Auswerteeinrichtung 30, die die von dem Füllstandmessgerät 10 der Fig. 1 empfangenen Signale unter Anwendung des erfindungsgemäßen Verfahrens be- und auswertet. Hierzu umfasst die Auswerteeinrichtung 30 einen Speicher 36, eine Bildverarbeitungseinheit 37 sowie eine Signalverarbeitungseinheit 38. Im Unterschied zu dem Füllstandmessgerät der Fig. 2 kann die Auswerteeinrichtung 30 an einem anderen Ort als direkt an einem Behälter befinden und ist daher geeignet, Füllsandhüllkurven mehrer Füllstandmessgeräte gleichzeitig auszuwerten.

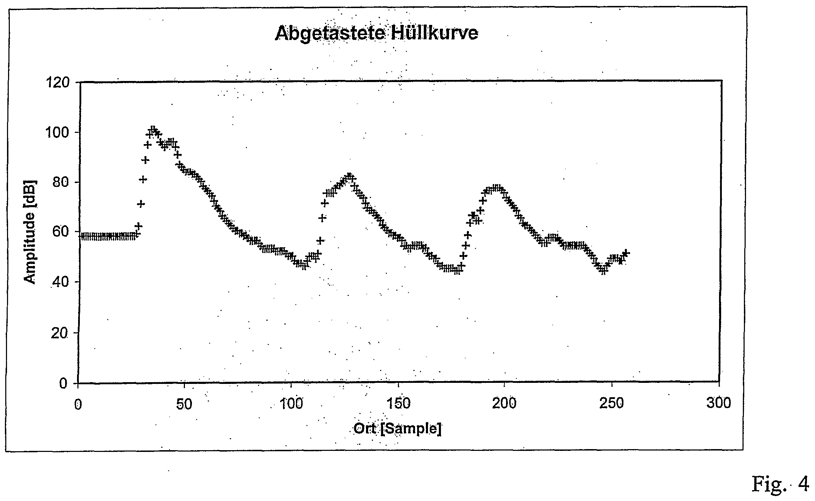

Als Grundlage für die Signalverarbeitung in der Füllstandmesstechnik dienen durch einen Analog-Digital-Wandler abgetastete Füllstandhüllkurven. Eine derartig in konstanten Zeitabständen abgetastete Füllstandhüllkurve zeigt die Fig. 4. Global betrachtet liegen in der in Fig. 4 grafisch dargestellten Füllstandhüllkurve drei Echos vor, wobei jedoch durch bloße Betrachtung dieser Füllstandhüllkurve nicht entschieden werden kann, welches der drei Echos das tatsächliche Füllstandecho repräsentiert. Prinzipiell kann jedes der drei Echos sowohl Füllstand- als auch ein Stör- oder ein Mehrfachecho repräsentieren. Wurde jedoch einmal ein Echo als Füllstand- oder Störecho erkannt, so ist es mit dem erfindungsgemäßen Verfahren möglich, für in Zukunft auftretende Echos mit sehr großer Wahrscheinlichkeit vorauszusagen, ob ein Echo ein Füllstand- oder ein Störecho ist.

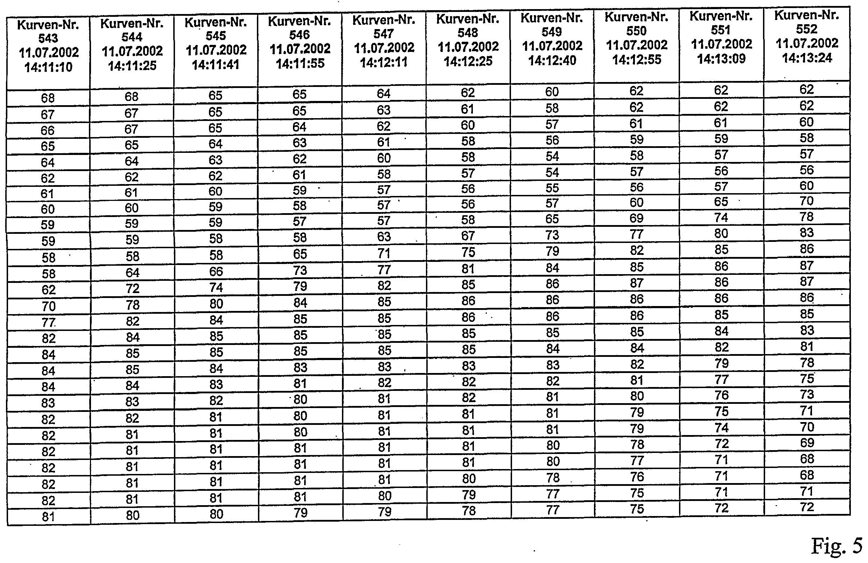

Hierzu wird eine in äquidistanten Zeitabständen erzeugte Füllstandhüllkurve, wie beispielsweise in Fig. 4 dargestellt, nacheinander spalten- oder zeilenweise in einem zweidimensionalen Array oder einer Matrix in Abhängigkeit von Ort und Zeit abgespeichert. Bei mehreren aufgenommenen Füllstandhüllkurven entsteht so ein Array mit den Dimensionen Ort und Zeit, wie es die Fig. 5 zeigt. In dem in Fig. 5 dargestellten Ausschnitt eines Arrays repräsentieren die einzelnen Spalten die zu unterschiedlichen Zeiten aufgenommenen Füllstandhüllkurven und die Zeilen den Ort der einzelnen Echos. In dem Array der Fig. 5 sind somit die Echoamplituden $A$ in Abhängigkeit von der Zeit $t$ (Spalte) und dem Ort $s$ (Zeile) aufgetragen:

$$A(t,s)\,.$$

Die maximale Spaltenanzahl des Arrays lässt sich nach einem Durchlauf des vorliegenden Verfahrens bestimmen, kann aber auch einem fest vorgegebenen Wert entsprechen. Das Array wird so lange mit neu aufgenommenen Füllstandhüllkurven aufgefüllt, bis die maximale Spaltenanzahl erreicht ist. Sobald diese erreicht ist, setzen die weiteren Verfahrensschritte des vorliegenden Verfahrens ein, mit denen die Erwartungsbereiche für das nächste Array bzw. Zeitfenster berechnet werden. Die Anzahl der Spaltenzahl entspricht in jedem Array einem Zeitfenster, in dem die Echoverhältnisse eine gewisse Zeit zurückverfolgt werden können. Die maximale Anzahl der Zeilen ergibt sich aus dem Abstand der einzelnen Abtastpunkte des Analog-Digital-Wandlers und des maximalen Messbereichs des Sensors. Im Folgenden wird kurz beschrieben, wie sich die Anzahl der Spalten im Rahmen des erfindungsgemäßen Verfahrens bestimmen lässt. Diese Vorgehensweise ist jedoch nicht zwingend erforderlich, da bei gewöhnlichen Verhältnissen auch ausreihend gute Ergebnisse mit einer konstant festgesetzten Spaltenanzahl erreicht werden können.

Soll die maximale Anzahl der Spalten jedoch dynamisch bestimmt werden, hängt diese von der Befüllungsgeschwindigkeit und der Zeitabstände der einzelnen Füllstandhüllkurven (Zykluszeit) zueinander ab. Dabei muss ein Kompromiss gefunden werden, der abwägt zwischen der Größe des Arrays und der Funktion der folgenden Algorithmen. Geht man beispielsweise von einer Füllgeschwindigkeit $v$ von ca. 2,3 m/h aus und wird zur Verfolgung des Füllstandes der Verlauf des letzten halben Meters als ausreichend betrachtet (dieser Wert sollte auf jeden Fall größer als die Breite eines Echos sein), dann müsste das Array gemäß

$$\Delta t = \frac{\Delta s}{\Delta v}$$

ein Zeitfenster von ca. 13 Minuten umfassen.

Die Anzahl der Spalten z ergibt sich nun aus dem abzuspeichernden Zeithorizont (13 min.) und der Zykluszeit des Sensors. Bei einer Zykluszeit *f* von 1 1/s würde sich somit eine Anzahl an Spalten z von 780 [-] gemäß

$$z = \Delta t \cdot f$$

ergeben.

Da sich nun bei dieser Befüllungsgeschwindigkeit das Füllstandecho von Hüllkurve zu Hüllkurve nur um 0,64 mm bewegen würde, wäre es hier möglich, für die Verfolgung des Echos einen größeren Zeitabstand zu verwenden. Somit wäre es im vorliegenden Beispiel sicherlich ausreichend, Hüllkurven nur etwa in einem Abstand von 6,4 cm abzuspeichern, womit sich die maximale Zahl z der Spalten auf 78 reduzieren würde.

Da nach einmaligen Durchlauf des erfindungsgemäßen Verfahrens unter anderem als Ergebnis die Befüllungsgeschwindigkeit vorliegt, kann damit die Arraygröße bestimmt werden. Eine derartige Anpassung der Arraygröße ist zwar wünschenswert, da dadurch Speicherplatz und Rechenzeit eingespart werden kann, ist jedoch andererseits nicht dringend erforderlich, da mit einer konstanten Arraygröße bei nicht außergewöhnlichen Befüllungsvorgängen sich ebenso gute Ergebnisse erzielen lassen.

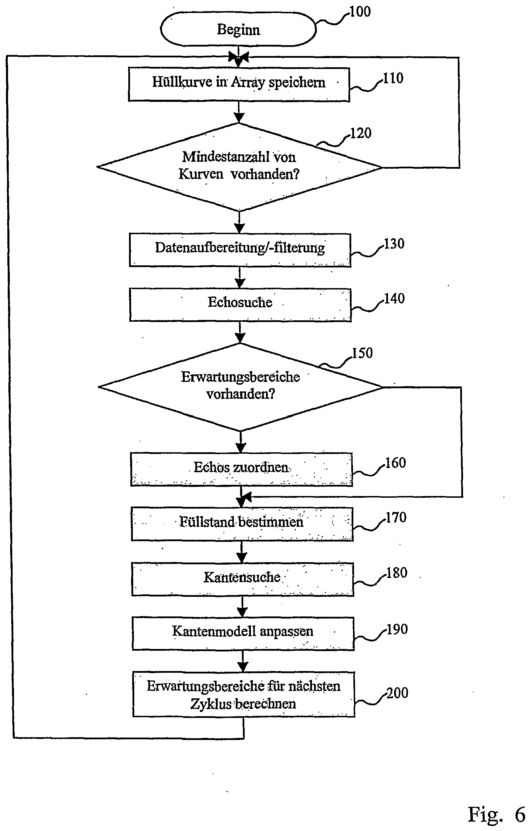

In der Fig. 6 ist nun eine mögliche Vorgehensweise für das erfindungsgemäße Verfahren in einem Flussdiagramm veranschaulicht. Nachdem das Verfahren in Schritt 100 gestartet wurde, wird in Schritt 110 damit begonnen, die durch einen Analog-Digital-Wandler abgetastete Füllstandhüllkurven in einem Array abzuspeichern. Dieser Schritt wurde bereits schon bei der Fig. 5 eingehend beschrieben. In dem nächsten Verfahrensschritt 120 wird mittels einer logischen Abfrage entschieden, ob das Array bereits komplett mit aus in der Vergangenheit liegenden Echodaten von Füllstandhüllkurven beschrieben ist. Sollte dem nicht so sein, so wird der Schritt 110 in einer Schleife so lange ausgerührt, bis das Array mit Füllstandhüllkurven gefüllt ist.

Sobald das Array mit z Füllstandhüllkurven voll beschrieben ist, wird in dem nächsten Verfahrensschritt 130 damit begonnen, unerwünschte Signalanteile, wie z.B. Rauschen, auszufiltern, wodurch eine Reduzierung der zu verarbeitenden Datenmenge erreicht werden kann. Diese Filterung erfolgt mit an sich bekannten Methoden der Bildverarbeitung.

Im Falle, dass, wie bereits eingangs beschrieben, die Erwartungsbereichsbestimmung schon nach jeder *n*-ten ($n \in \mathbb{N}^*$, *n < z*) neu registrierten Füllstandhüllkurve erfolgt, wird in Schritt 110 zusätzlich eine Umspeicherung der in dem Array abgelegten Füllstandkurven bzw. der entsprechenden Echodaten erforderlich. Dies kann beispielsweise so erfolgen, dass die ältesten *n* Füllstandhüllkurven gelöscht werden, die verbleibenden *z-n* Füllstandhüllkurven um *n* Spalten verschoben werden, und die so frei werdenden *n* Spalten in einer Schleife in Schritt 110 so lange aufgefüllt werden, bis das Array wieder mit Füllstandhüllkurven voll belegt ist.

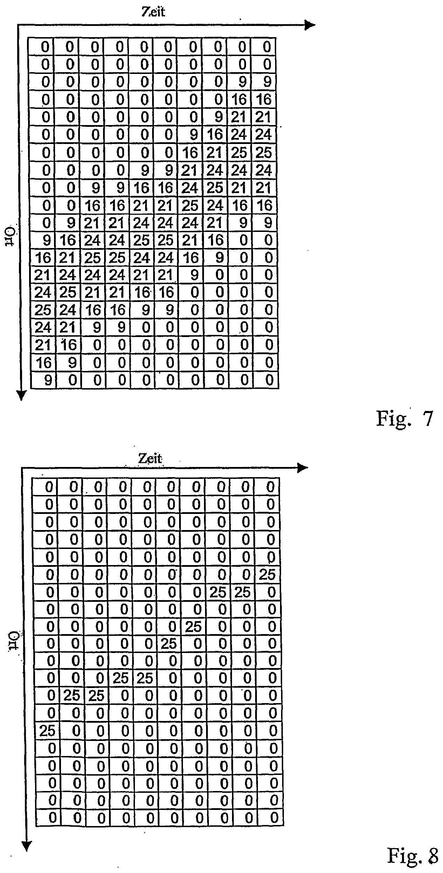

In den Fig. 7 und 8 ist der in Schritt 130 beschriebene Bildverarbeitungsalgorithmus nummerisch dargestellt. Die Fig. 7 ist hierbei ein exemplarischer Ausschnitt des Arrays, das in den Schritten 110 mit Füllstandhüllkurven aufgefüllt wurde. Wie hier zu erkennen ist, verändert das Echo mit der Amplitude 25 in Abhängigkeit der Zeit seinen Ort. In Schritt 130 werden nun mit Methoden der Bildverarbeitung, wie der Selektion die Parameter jedes Echos ermittelt. Als Echobreite wird in Fig. 7 beispielsweise bei jedem Echo der Füllstandskurve die Anzahl der Ortseinheiten zwischen den beiden Zahlen "9" angenommen. Durch diese beiden Zahlen werden ebenfalls sowohl Anfang als auch Ende des Echos festgestellt. Mit einem Algorithmus zur Maximumbestimmung (vgl. auch Schritt 140) wird aus jedem Echo der Maximalwert herausgefiltert. In Fig. 7 ergibt sich dieser Maximumwert in der Serie von Hüllkurven jeweils zu 25. Die so aufgefundenen Parameter werden unabhängig von dem Array gespeichert, so dass als Ergebnis dieser Bildverarbeitungsalgorithmen lediglich das in Fig. 8 dargestellte Array, in dem nur noch die Maximumwerte beziffert sind, übrig bleibt. Das in Fig. 8 dargestellte Array wird in Schritt 180 dann weiterverarbeitet.

In Schritt 140 wird jede einzelne Füllstandhüllkurve auf Maximumwerte, also auf Amplituden der einzelnen Echos untersucht. Hierzu kommen andere bekannte Verfahren der Bildverarbeitung, wie beispielsweise ein Algorithmus zur Maximumsuche zum Einsatz. Die so aufgefundenen Echos werden dabei durch ihre zugehörigen Parameter, wie beispielsweise Ort, Amplitude, Anfang und Ende genauer quantifiziert.

In Schritt 150 findet eine Abfrage statt, ob für das aktuelle Zeitfenster bereits in der Vergangenheit Erwartungsbereiche bestimmt wurden, denen die in Schritt 140 detektierten Echos zugeordnet werden können. Sind noch keine Erwartungsbereiche vorhanden, so muss der Schritt 160 übersprungen werden, und der Füllstand muss in Schritt 170 ohne Vergangenheitsinformation bestimmt werden. Zur Bestimmung des Füllstandes kann dann beispielsweise von dem Echo mit der größten Amplitude ausgegangen werden.

Wurden jedoch für das aktuelle Zeitfenster Erwartungsbereiche bestimmt, werden die im Schritt 140 zuvor aufgefundenen Echos anhand ihrer Parameter den Erwartungsbereichen und den damit vergangenen Echos zugeordnet. Diese Zuordnung zu den Erwartungsbereichen erfolgt in Schritt 160. Kann in diesem Schritt ein Echo einem Erwartungsbereich zugewiesen werden, so kann mit einer vorausbestimmbaren Wahrscheinlichkeit davon ausgegangen werden, dass dieses Echo nicht fälschlicherweise diesem Erwartungsbereich zugeordnet wurde. Wurde dem Erwartungsbereich beispielsweise eine Bereichsbreite von der sechsfachen Standardabweichung der Echos im letzten Zeitfenster zugewiesen, so kann im aktuellen Zeitfenster mit einer Wahrscheinlichkeit von 99,7 % davon ausgegangen werden, dass ein Echo, das dem Erwartungsbereich zugeordnet wurde, nicht fälschlicherweise diesem zugewiesen wurde und es kann in Schritt 170 der Füllstand bestimmt werden..

Können im aktuellen Zeitfenster einzelne Echos keinem Erwartungsbereich zugeordnet werden, dürfen diese für die Berücksichtigung der Erwartungsbereiche für das nächste in Zukunft liegende Zeitfenster nicht berücksichtigt werden und müssen verworfen werden. Ebenfalls ist es möglich, dass in den Erwartungsbereich des Füllstandes kein Echo zugeordnet werden kann. Hier ist es beispielsweise möglich, dass das Echo z.B. durch eine beginnende Füllung verschwunden ist. In diesem Falle sollte der Ort und die Zeit des Verlustes des Füllstandechos gespeichert werden, um dies bei der Bestimmung des zukünftigen Erwartungsbereichs berücksichtigen zu können.

In den Schritten 180, 190 und 200 werden nun anschließend die Erwartungsbereiche für das nächste in Zukunft liegende Zeitfenster berechnet. In Schritt 180 werden hierzu zunächst die Verläufe der Echos in dem Array mit Hilfe eines Kantendetektionsalgorithmus erkannt, d.h. es werden zu einem bestimmten Echo korrelierende Amplituden gesucht.

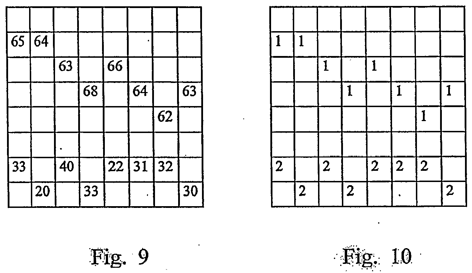

In Fig. 9 und Fig. 10 wird hierfür beispielhaft ein mögliches Verfahren verdeutlicht. Die dort dargestellten Arrays entsprechen einem exemplarischen Ausschnitt aus einem Füllstandhüllkurvenarray gemäß der Fig. 8 mit den Dimensionen Ort, Zeit und Amplitude. Geht man in Fig. 9 nun von der ersten Zeile in der ersten Spalte aus und wandert nach unten, gelangt man in der zweiten Zeile zum ersten Echo. Diesem Echo wird die Nummer 1 vergeben und trägt diese in die entsprechende Zelle der in Fig. 10 dargestellten Arrays ein. Von diesem Startpunkt aus wird anschließend die nächstliegende Umgebung punktweise analysiert, um so zu der Spalte und Zeile mit dem höchsten Nachbarschaftswert zu gelangen. Diesem Nachbarschaftswert wird die entsprechende Nummer, im vorliegenden Falle die Nummer 1, vergeben, welche anschließend wiederum in die entsprechende Zelle des in Fig. 10 dargestellten Arrays eingetragen wird. Diese Vorgehensweise wird fortgeführt, bis man am Ende des Arrays angekommen ist, oder bis sich die "Spur" des Echos verliert. Danach wird ein Startwert für das nächste Echo gesucht und das Verfahren wird entsprechend fortgeführt. Mit diesem Verfahren erhält man schließlich das in Fig. 10 dargestellte Array, in dem die Verläufe der beiden Echos der Fig. 9 durch ihre Nummern hervorgehoben sind. Auf diese Weise werden die zu jedem Echo gehörenden Kanten erkannt.

Aus den so aufgefundenen Kantenverläufen können nun in Schritt 190 durch geeignete Kurvenapproximationsverfahren, wie beispielsweise eine Polynominterpolation, eine Spline-Interpolation, eine Regressionsanalyse oder eine Korrelationsanalyse Gleichungen ermittelt werden, die die in Schritt 180 aufgefundenen Kantenverläufe annähern. Beispielsweise werden mit einer Regressionsrechnung die Parameter einer geraden oder eines Polynoms bestimmt, die den Verlauf der Kanten annähern. Für den Fall, dass die jeweiligen Zeitfenster eine bestimmte Größe jedoch nicht überschreiten und dass die Zykluszeit der einzelnen Füllstandhüllkurven nicht zu groß gewählt ist, ist in erster Näherung eine Annäherung der Kantenverläufe durch eine lineare Regression als ausreichend gut zu beurteilen.

Auf den mit der Nummer 1 bezeichneten Kantenverlauf des in Fig. 10 dargestellten Arrays angewendet, ergibt sich somit eine Gerade wie folgt:

Werden die Spalten des Arrays in der Fig. 3b mit x und die zugehörigen Zeilen mit *y* bezeichnet, so ergeben sich die Parameter *a*, *b* der Geraden

$$y = a \cdot x + b$$

zu

$$b = \frac{\sum y_i \cdot \sum x_i^2 - \sum x_i \cdot \sum x_i y_i}{n \cdot \sum x_i^2 - (\sum x_i)^2}$$

$$a = \frac{n \cdot \sum x_i y_i - \sum y_i \cdot \sum x_i}{n \cdot \sum x_i^2 - (\sum x_i)^2}.$$

Auf das Echo mit der Nummer 1 des in Fig. 10 dargestellten Arrays angewendet, ergibt sich:

$$\sum y_i = 7 + 7 + 6 + 5 + 6 + 5 + 4 + 5 = 45$$

$$\sum x_i^2 = 1 + 4 + 9 + 16 + 25 + 36 + 49 + 64 = 204$$

$$\sum x_i = 1 + 2 + 3 + 4 + 5 + 6 + 7 + 8 = 36$$

$$\sum x_i y_i = 7 \cdot 1 + 7 \cdot 2 + 6 \cdot 3 + 5 \cdot 4 + 6 \cdot 5 + 5 \cdot 6 + 4 \cdot 7 + 5 \cdot 8 = 187$$

daraus folgt:

$$b = \frac{45 \cdot 204 - 36 \cdot 187}{8 \cdot 204 - 36 \cdot 36} \approx 7$$

$$a = \frac{8 \cdot 187 - 45 \cdot 36}{8 \cdot 204 - 36 \cdot 36} \approx -0{,}4$$

Daraus ergibt sich die Gleichung der Geraden zu

$$y = -0{,}4 \cdot x + 7 \; .$$

Die Steigung der so berechneten Geraden entspricht im Falle, dass das Echo mit der Nummer 1 das Füllstandecho ist, der Befüllungsgeschwindigkeit. Mit diesem Wert lässt sich, wie bereits beschrieben, eine Anpassung der Arraygröße für das nächste Zeitfenster vornehmen.

Geht man davon aus, dass die Streuungen des tatsächlichen Verlaufs statistisch um den Trend, der durch die ermittelten Geraden repräsentiert wird, verteilt ist, werden gemäß Schritt 200 bestimmte Verteilungsparameter aus den Streuungen ermittelt. Im Wesentlichen ist davon auszugehen, dass die Echos um den Trend, der durch die ermittelten Geraden repräsentiert wird, normal verteilt sind. Jedoch lässt sich auch jede andere Verteilungsfunktion zur Berechnung bestimmter Verteilungsparameter, wie beispielsweise die Exponentialverteilung, logarithmische Normalverteilung, die Weibull-Verteilung oder die Gamma-Verteilung zu Grunde legen. Im vorliegenden Falle wird jedoch von einer Normalverteilung der einzelnen Echos ausgegangen.

Aus der so angenäherten Geraden und den tatsächlichen Werten kann somit ein Schätzwert für die Varianz $\sigma^2$, bzw. die Standardabweichung $\sigma$ berechnet werden:

$$\sigma^2 \approx \frac{1}{n-1} \cdot \sum (y_i - a \cdot x_i + b)^2$$

Im vorliegenden Falle also

$$\sigma^2 \approx \frac{1}{7} \cdot \left( \begin{array}{c} (7-6{,}6)^2 + (7-6{,}2)^2 + (6-5{,}8)^2 + (5-5{,}4)^2 \\ + (6-5)^2 + (5-4{,}6)^2 + (4-4{,}2)^2 + (5-3{,}8)^2 \end{array} \right) = 0{,}429$$

Um beispielsweise mit 99,7 %-iger Wahrscheinlichkeit eine Aussage darüber treffen zu können, wie sicher ein Echo, das in einen Erwartungsbereich fällt, nicht fälschlicherweise diesem zugerechnet wurde, muss man einen Wert von $3\sigma$ für den Bereich beiderseits um die den Trend repräsentierende Gerade zulassen. Somit ergeben sich für die Geraden, die den Erwartungsbereich abgrenzen, zu

$$y_{obereGrenze} = a \cdot x + b + 3\sigma = -0,4x + 8,96$$

und

$$y_{untereGrenze} = a \cdot x + b - 3\sigma = -0,4x + 5,03 \, .$$

Liegt nur ein Echo im nächsten Zeitfenster innerhalb dieses Erwartungsbereichs, so ist dieses Echo mit 99,7 %-iger Wahrscheinlichkeit das gleiche wie in den vergangenen Zyklen, so dass mit diesem so detektiertem Echo das Verfahren in Schritt 110 erneut durchlaufen werden kann.

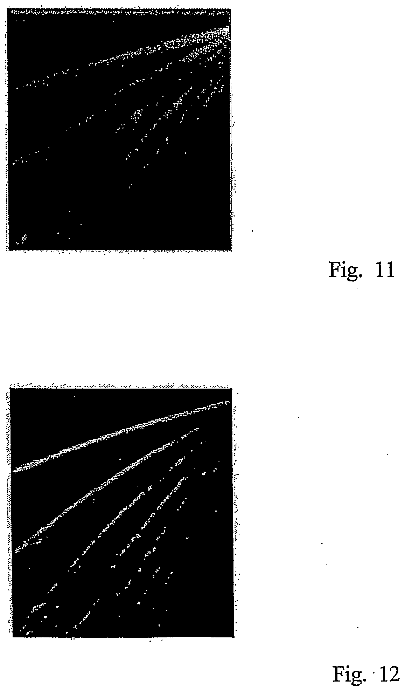

Die Fig. 11 und 12 stellen Grauwertbilder des Arrays dar, in dem die Füllstandhüllkurven abgespeichert werden. Die Fig. 11 zeigt hierbei als helle, jedoch relativ breite Bereiche die Echos der Füllstandkurven vor der Bearbeitung. Die Fig. 12 zeigt im Wesentlichen die Echos der gleichen Füllstandhüllkurven wie die Fig. 11, jedoch unterscheidet sich die Darstellung der Fig. 12 gegenüber der Fig. 11 dadurch, dass das Grauwertbild durch die Methoden der Bildverarbeitung, wie beispielsweise der Kantenfilterung wesentlich deutlicher und schärfer für das menschliche Auge zu erkennen ist. Eine derartige visualisierte Darstellung der Füllstandhüllkurven bzw. der Arrays als Grauwertbild kann einer Bedienperson beispielsweise dazu nützlich sein, um zu erkennen, ob der erfindungsgemäße Algorithmus richtig arbeitet, und falls nicht, in welcher Weise er eingreifen muss. Beispielsweise kann er unter Zuhilfenahme dieser Grauwertbilder entscheiden, ob die aktuelle Arraygröße möglicherweise zu klein gewählt ist, oder ob die Zykluszeiten von Füllstandhüllkurve zu Füllstandhüllkurve angepasst werden müssen.

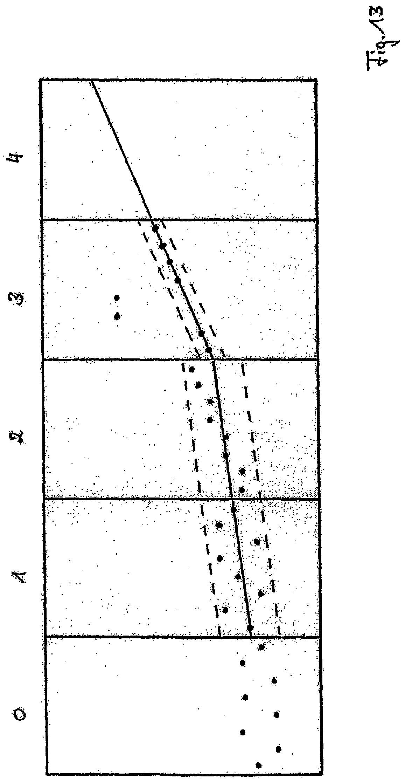

In der Fig. 13 wird das erfindungsgemäße Verfahren nochmals anschaulich erläutert. Jedes dort dargestellte Zeitfenster umfasst acht Echos, wobei nach jedem achten Echo ein neuer Erwartungsbereich für die kommenden acht Echos berechnet wird. In der Fig. 13 sind fünf zeitlich aufeinander folgende Zeitfenster dargestellt. Geht man davon aus, dass das Zeitfenster 0 in der Vergangenheit liegt, so lässt sich der in Zeitfenster 1 gestrichelt dargestellte Erwartungsbereich aus den Amplituden des Echos aus Zeitfenster 0 bestimmen. Der Erwartungsbereich des Zeitfensters 1 ergibt sich dadurch, dass in Zeitfenster 0 zuerst die Ausgleichsgerade berechnet wird, durch die die dort sichtbaren Echos angenähert werden können. Diese Annäherungsgerade entspricht der durchgezogenen Linie in Zeitfenster 1. Anschließend wird aus den Abweichungen der Echos in Zeitfenster 0 gegenüber dieser Geraden die Standardabweichung berechnet. Unter Verwendung dieser Standardabweichung wird in Zeitfenster 1 die Breite des Erwartungsbereichs beiderseits der berechneten Trendgeraden bestimmt. Beträgt diese Breite beiderseits der Trendgeraden in Zeitfenster 1 beispielsweise das dreifache der Standardabweichung σ, so kann für Zeitfenster 1 mit 99,7 %-iger Wahrscheinlichkeit eine Aussage drüber getroffen werden, ob die hier dargestellten und in diesen Erwartungsbereich hineinfallenden Echos dem Echo aus Zeitfenster 0 entsprechen.

Da im vorliegenden Falle somit davon ausgegangen werden kann, dass alle in Zeitfenster 1 in den Erwartungsbereich fallenden Echos tatsächlich diesem zugeordnet werden dürfen, kann aus diesen Echos in analoger Weise die Trendgerade für Zeitfenster 2 sowie der sich darum liegende Erwartungsbereich bestimmt werden. In Zeitfenster 2 fallen abermals alle Echos in den gestrichelten Erwartungsbereich. Somit ist auch hier wieder davon auszugehen, dass alle Echos tatsächlich zu dieser Echoserie gehören, so dass aus diesen Echos wiederum die Trendgerade für das dritte Zeitfenster sowie der darum befindliche Erwartungsbereich berechnet werden darf. Legt man jedoch in Zeitfenster 2 die Ausgleichsgerade durch die einzelnen Echos, so ergibt sich daraus für Zeitfenster 3 eine gegenüber der Steigung des Erwartungsbereichs des Zeitfensters 2 stärker ansteigende Trendgerade. Da zu dem in Zeitfenster 2 die einzelnen Echodaten weniger um die Ausgleichsgerade streuen, verschmälert sich somit auch für das Zeitfenster 3 die Breite des Erwartungsbereichs.

In Zeitfenster 3 ist zu erkennen, dass das dritte und das vierte Echo außerhalb des prognostizierten Erwartungsbereichs liegen. Die übrigen Echos hingegen liegen exakt auf der Trendgeraden des dritten Zeitfensters. Zur Prognose des vierten Zeitfensters dürfen somit das dritte und das vierte Echo nicht berücksichtigt werden, da diese außerhalb des Erwartungsbereichs des Zeitfensters 3 liegen und den Erwartungsbereich des Zeitfensters 4 sonst fälschlicherweise beeinflussen würden, so dass dieser stärker ansteigen würde als dargestellt. Da in Zeitfenster 3 die übrigen Echos exakt auf der Trendgeraden liegen, reduziert sich für Zeitfenster 4 der Erwartungsbereich auf die Trendgerade selbst. Dies ist jedoch eher eine akademische Betrachtungsweise, die in der Praxis normalerweise nicht anzutreffen sein dürfte.

**Patentansprüche**

1. Verfahren zur Bestimmung zumindest eines Erwartungsbereiches für, von einem Ultraschall- oder Radarfüllstandmessgerät (10) erzeugten, Füllstand- oder Störechos,
   wobei der zumindest eine Erwartungsbereich auf Grundlage eines Trends in dem zeitlichen Verhalten von zumindest zwei in der Vergangenheit liegenden Füllstand- oder Störechos aus einem früheren Zeitfenster bestimmt wird,
   wobei der Erwartungsbereich ein Raum-Bereich in einem in der Zukunft liegenden Zeitfenster ist, in dem zukünftig liegende Füllstand- oder Störechos zu erwarten sind,
   wobei der Erwartungsbereich bestimmt wird, indem i) die zumindest zwei Echos aus dem früheren Zeitfenster mit einer Näherungskurve zur Erfassung des Trends angenähert werden, und ii) wobei eine Abweichungsdistanz der Echos um die Näherungskurve herum bestimmt wird.

2. Verfahren nach Anspruch 1,
   wobei nach jeder von dem Füllstandmessgerät (10) neu empfangenen Füllstandhüllkurve ein neuer Erwartungsbereich bestimmt wird.

3. Verfahren nach Anspruch 1,
   wobei nach *n* neu von dem Füllstandmessgerät (10) empfangenen Füllstandhüllkurven ein neuer Erwartungsbereich bestimmt wird, wobei gilt $n \in \mathbb{N}^*$.

4. Verfahren nach Anspruch 1,
   wobei das Verfahren die folgenden Schritte umfasst:

   - Abtasten einer von dem Füllstandmessgerät (10) aktuell empfangenen Füllstandhüllkurve durch einen Analog-Digital-Wandler;
   - Ablegen der Echos der abgetasteten Füllstandhüllkurve als Daten, wobei die Echos jeweils durch eine Zeit-, Ort- und Amplituden-Parameter definierbar sind, in einem Array vorbestimmbarer Größe;
   - Aufbereiten der in dem Array abgelegten Echos mit Methoden der Bildverarbeitung;
   - Aufsuchen einzelner Echos in den so abgelegten Daten;
   - Prüfen ob die aufgefundenen Echos dem Erwartungsbereich zuordenbar sind;
   - falls ein Echo dem Erwartungsbereich für den Füllstand zuordenbar ist, damit Bestimmen eines Füllstandes; und
   - wenn das Array mit Daten belegt ist, Bestimmen eines neuen Erwartungsbereiches für in der Zukunft zu erwartende Echos.

5. Verfahren nach Anspruch 4,
   wobei die Echos in dem Array mit den Dimensionen Ort, Zeit und Amplitude abgelegt werden.

6. Verfahren nach Anspruch 1,
   wobei die Näherungskurve mit Hilfe eines Regressionsverfahrens, eines Polynominterpolationsverfahrens oder einem Approximationsverfahren bestimmt wird.

7. Verfahren nach Anspruch 1,
   wobei als Abweichungsdistanz ein Vielfaches der Standardabweichung der Echos gegenüber der Näherungskurve bestimmt wird.

8. Verfahren nach Anspruch 8,
   wobei durch das Vielfache der Standardabweichung festgelegt wird, mit welcher Wahrscheinlichkeit ein in der Zukunft in einem Erwartungsbereich befindliches Echo tatsächlich zu diesem Erwartungsbereich zugeordnet werden darf.

9. Verfahren nach Anspruch 8,
   wobei aus der Steigung der Näherungskurve die aktuelle Änderung des Füllstandes bestimmt wird.

10. Verfahren nach Anspruch 4,
    wobei die Größe des Array, in dem die aktuell empfangene Füllstandhüllkurve abgelegt wird, der aktuellen Änderung des Füllstandes angepasst wird.

11. Auswerteeinrichtung (20) ausgebildet zur Bestimmung zumindest eines Erwartungsbereiches für, von einem Füllstandmessgerät (10) erzeugten, Füllstand- oder Störechos,
wobei der zumindest eine Erwartungsbereich auf Grundlage eines Trends in dem zeitlichen Verhalten von zumindest zwei in der Vergangenheit liegenden Füllstand- oder Störechos aus einem früheren Zeitfenster bestimmt wird,
wobei der Erwartungsbereich ein Raum-Bereich in einem in der Zukunft liegenden Zeitfenster ist, in dem zukünftig liegende Füllstand- oder Störechos zu erwarten sind,
wobei die Auswerteeinrichtung (20) eine Signalverarbeitungseinheit (28) aufweist, die ausgebildet ist den Erwartungsbereich zu bestimmen, indem i) die zumindest zwei Echos aus dem früheren Zeitfenster mit einer Näherungskurve zur Erfassung des Trends angenähert werden, und ii) wobei eine Abweichungsdistanz der Echodaten um die Näherungskurve herum bestimmt wird.

12. Auswerteeinrichtung nach Anspruch 11,
wobei die Auswerteeinrichtung (20) mit einem Speicher (26) ausgestattet ist, in dem eine aktuell empfangene Füllstandhüllkurve nach einer Analog-Digital-Wandlung mit den Dimensionen Ort, Zeit und Amplitude in einem Array vorbestimmbarer Größe abgelegt wird.

13. Auswerteeinrichtung nach einem der Ansprüche 12,
wobei die Auswerteeinrichtung (20) weiterhin eine Bildverarbeitungseinheit umfasst, die ausgebildet ist, die die in dem Array abgespeicherten Füllstandhüllkurven aufzubereiten und darin befindliche, einzelne Echos aufzufinden.

14. Auswerteeinrichtung nach einem der Ansprüche 13,
wobei die Auswerteeinrichtung (20) ausgestaltet ist um zu prüfen ob ein Einzelecho der aufgefundenen Einzelechos dem Erwartungsbereich zuordenbar ist und um aus einem dem Erwartungsbereich zugeordneten Echo den Füllstand zu bestimmen.

15. Auswerteeinrichtung nach Anspruch 14,
wobei die Auswerteeinrichtung (20) weiterhin so ausgestaltet ist, um, sobald das Array mit Daten belegt ist, einen neuen Erwartungsbereiches für in der Zukunft zu erwartende Echos zu bestimmen.

16. Auswerteeinrichtung nach Anspruch 11,
wobei die Signalverarbeitungseinheit (28) ausgebildet ist den Funktionsverlauf mit Hilfe eines Regressionsverfahrens, eines Polynominterpolationsverfahrens oder einem Approximationsverfahren zu bestimmten.

17. Auswerteeinrichtung nach Anspruch 11,
wobei die Signalverarbeitungseinheit (28) als Abweichungsdistanz ein Vielfaches der Standardabweichung der Echodaten gegenüber der Näherungskurve bestimmt.

18. Auswerteeinrichtung nach Anspruch 11,
wobei die Größe des Arrays, das in dem Speicher (32) der Auswerteeinheit (20) abgelegt wird und in dem die aktuell empfangenen Füllstandhüllkurve abgelegt werden, dynamisch an die aktuelle Änderung des Füllstandes, die durch die Steigung des Funktionsverlaufs repräsentiert wird, anpassbar ist.

19. Auswerteeinrichtung nach einem der Ansprüche 11-18, wobei die Auswerteeinrichtung (20) in einem Füllstandsmessgerät (10) integriert ist.

20. Auswerteeinrichtung nach einem der Ansprüche 11-18, wobei die Auswerteeinrichtung (20) in einem Füllstandmessgerät (10) integriert ist.

21. Auswerteeinrichtung nach einem der Ansprüche 13-20, wobei die Auswerteeinrichtung (20) von einem Füllstandmessgerät (10) beabstandet ist und über eine Datenverbindung mit dem Füllstandmessgerät (10) verbunden ist.

22. Computerprogramm zur Bestimmung zumindest eines Erwartungsbereiches für, von einem Ultraschall- oder Radarfüllstandmessgerät (10), erzeugte Füllstand- oder Störechodaten,
wobei das Computerprogramm Anweisungen aufweist, um den zumindest einen Erwartungsbereich auf Grundlage eines Trends in dem zeitlichen Verhalten von zumindest zwei in der Vergangenheit liegenden Füllstand- oder Störechos aus einem früheren Zeitfenster zu bestimmen,
wobei der Erwartungsbereich ein Raum-Bereich in einem in der Zukunft liegenden Zeitfenster ist, in dem zukünftig liegende Füllstand- oder Störechos zu erwarten sind, wobei der neue Erwartungsbereich bestimmt wird, indem i) die zumindest zwei Echos in dem früheren Zeitfenster mit einer Näherungskurve zur Erfassung des Trends angenähert werden, und ii) wobei eine Abweichungsdistanz der Echos um die Näherungskurve herum bestimmt wird.

**23.** Computerprogramm nach Anspruch 22,
wobei durch die Anweisungen die folgenden Verfahrensschritte ausführbar sind:

- Abtasten einer von dem Füllstandmessgerät aktuell empfangenen Füllstandhüllkurve durch einen Analog-Digital-Wandler;
- Ablegen der Echos der abgetasteten Füllstandhüllkurve als Daten, wobei die Echos jeweils durch eine Zeit-, Ort- und Amplituden-Parameter definierbar sind, in einem zumindest 2-dimensionalen Array vorbestimmbarer Größe;
- Aufbereiten der in dem Array abgelegten Echos mit Methoden der Bildverarbeitung;
- Aufsuchen einzelner Echos in den so abgelegten Daten;
- Prüfen ob die aufgefundenen Echos dem Erwartungsbereich zuordenbar sind;
- falls ein Echo dem Erwartungsbereich für den Füllstand zuordenbar ist, damit Bestimmen eines Füllstandes; und
- wenn das Array mit Echodaten belegt ist, Bestimmen eines neuen Erwartungsbereiches für in der Zukunft zu erwartende Echos.

**24.** Computerprogrammprodukt, umfassend ein Computerprogramm nach Anspruch 22 oder 23 zur Bestimmung zumindest eines Erwartungsbereiches für, von einem Ultraschall- oder Radarfüllstandmessgerät (10) erzeugtes, Füllstand- oder Störecho, das direkt in den Speicher eines Computers geladen werden kann, und das Anweisungen nach Anspruch 22 oder 23 aufweist, um die folgenden Verfahrensschritte auszuführen, wenn das Computerprogramm auf einen Computer geladen ist.

## Claims

**1.** A method of determining at least one expectancy range for a filling level echo or a false echo generated by an ultrasonic or radar filling level measurement device (10),
wherein the at least one expectancy range is determined in consideration of a trend in the temporal behavior of at least two past filling level echoes or false echoes from a previous time window,
wherein the expectancy range is a region in a future time window in which future filling level echoes or false echoes may be expected,
wherein the expectancy range is determined by i) approximating the at least two echoes from the previous time window with an approximation curve for detecting the trend, and ii) wherein a deviation measure of the echoes is determined around the approximation curve.

**2.** The method according to claim 1,
wherein after each filling level envelope curve newly received by the filling level measurement device (10), a new expectancy range is determined.

**3.** The method according to claim 1,
wherein after $n$ filling level envelope curves newly received by the filling level measurement device (10), a new expectancy range is determined, whereby

applies $n \in \mathbb{N}^{*}$.

**4.** The method according to claim 1,
wherein the method comprises the following steps:

- sampling a filling level envelope curve currently received by the filling level measurement device (10) by an analog-to-digital converter;
- storing the echoes of the sampled filling level envelope curve as data, wherein the echoes are each definable by a time parameter, a location parameter and an amplitude parameter, in an array of a predeterminable size;
- processing the echo data stored in the array with image processing methods;
- searching individual echoes in the stored data;
- checking whether the found echoes are assignable to the expectancy range;
- in the case that an echo is assignable to the expectancy range for the filling level, determining the filling level using said echo; and

- when the array is occupied by data, determining a new expectancy range for echoes to be expected in the future.

5. The method according to claim 4,
   wherein the echo data is stored in the array including the dimensions location, time and amplitude.

6. The method according to claim 1,
   wherein the approximation curve is determined using a regression method, a polynomial interpolation method or an approximation method.

7. The method according to claim 1,
   wherein as the deviation measure, a multiple of the standard deviation of the echoes is determined as compared to the approximation curve.

8. The method according to claim 8,
   wherein it is established by said multiple of the standard deviation with which probability of a future echo present in an expectancy range may actually be assigned to this expectancy range.

9. The method according to claim 8,
   wherein the current change of the filling level is determined from the gradient of the approximation curve.

10. The method according to claim 4,
    wherein the size of the array in which the currently received filling level envelope curve is stored, is adapted to the current change of the filling level.

11. An evaluation means (20) adapted for determining at least one expectancy range for a filling level echo or a false echo generated by a filling level measurement device (10), wherein the at least one expectancy range is determined in consideration of a trend in the temporal behavior of at least two past filling level echoes or false echoes from a previous time window,
    wherein the expectancy range is a region in a future time window in which future filling level echoes or false echoes may be expected,
    wherein the evaluation means (20) comprises a signal processing unit (28) adapted for determining the expectancy range by i) approximating the at least two echoes from the previous time window using an approximation curve for detecting the trend, and ii) wherein a deviation measure of the echo data is determined around the approximation curve.

12. The evaluation means according to claim 11,
    wherein the evaluation means (20) is equipped with a memory (26), in which a currently received filling level envelope curve is stored after an analog-to-digital conversion with the dimensions location, time and amplitude in an array of a predeterminable size.

13. The evaluation means according to claim 12,
    wherein the evaluation means (20) further comprises an image processing unit which is adapted for processing the filling level envelope curves stored in the array and for searching individual echoes present therein.

14. The evaluation means according to one of the claims 13,
    wherein the evaluation means (20) is configured for checking whether an individual echo of the found individual echoes are assignable to the expectancy range and for determining the filling level from one echo assigned to the expectancy range.

15. The evaluation means according to claim 14,
    wherein the evaluation means (20) is further configured so as to determine a new expectancy range for echoes to be expected in the future, once the array is occupied by data.

16. The evaluation means according to claim 11,
    wherein the signal processing unit (28) is configured for determining the functional progression by means of a regression method, a polynomial interpolation method or an approximation method.

**17.** The evaluation means according to claim 11,
wherein the signal processing unit (28) determines as the deviation measure a multiple of the standard deviation of the echo data as compared to the approximation curve.

**18.** The evaluation means according to claim 11,
wherein the size of the array that is stored in the memory (32) of the evaluation unit (20), and in which the currently received filling level envelope curve is stored, is dynamically adaptable to the current change of the filling level, which change is represented by the gradient of the functional progression.

**19.** The evaluation means according to one of the claims 11-18,
wherein the evaluation means (20) is integrated in a filling level measurement device (10).

**20.** The evaluation means according to one of the claims 11-18,
wherein the evaluation means (20) is integrated in a filling level measurement device (10).

**21.** The evaluation means according to one of the claims 13-20,
wherein the evaluation means (20) is spaced from a filling level measurement device (10), and is in connection with the filling level measurement device (10) via a data link.

**22.** A computer program for determining at least one expectancy range for a filling level echo or a false echo generated by an ultrasonic or radar filling level measurement device (10),
wherein the computer program comprises instructions for determining the at least one expectancy range in consideration of a trend in the temporal behavior of at least two past filling level echoes or false echoes from a previous time window,
wherein the expectancy range is a region in a future time window in which future filling level echoes or false echoes may be expected,
wherein the new expectancy range is determined by i) approximating the at least two echoes from the previous time window with an approximation curve for detecting the trend, and ii) wherein a deviation measure of the echoes is determined around the approximation curve.

**23.** The computer program according to claim 22,
wherein the following process steps are executable by the instructions:

- sampling a filling level envelope curve currently received by the filling level measurement device (10) by an analog-to-digital converter;
- storing the echoes of the sampled filling level envelope curve as data, wherein the echoes are each definable by a time parameter, a location parameter and an amplitude parameter, in an at least 2-dimensional array of a predeterminable size;
- processing the echoes stored in the array with image processing methods;
- searching individual echoes in the stored data;
- checking whether the found echoes are assignable to the expectancy range;
- in the case that an echo is assignable to the expectancy range for the filling level, determining the filling level using said echo; and
- when the array is occupied by echo data, determining a new expectancy range for echoes to be expected in the future.

**24.** A computer program product, comprising a computer program according to one of claims 22 or 23 for determining at least one expectancy range for a filling level echo or a false echo generated by an ultrasonic or radar filling level measurement device (10), that is directly loadable into the memory of a computer and that comprises instructions according to claim 22 or 23 for carrying out the following process steps if the computer program is loaded on a computer.

**Revendications**

**1.** Procédé de détermination d'au moins une plage escomptée pour des échos de niveau ou parasites, générés par un appareil de mesure de niveau à ultrasons ou radar (10),
la au moins une plage escomptée étant déterminée à partir d'une fenêtre de temps antérieure, sur la base d'une tendance dans le comportement dans le temps d'au moins deux échos de niveau ou parasites situés dans le passé, la plage escomptée étant une plage spatiale dans une fenêtre de temps située dans le futur, fenêtre dans laquelle sont prévisibles des échos de niveau ou parasites situés dans le futur, la plage escomptée étant déterminée, i) les au moins deux échos de la fenêtre de temps antérieure étant approchés par une courbe d'approximation pour la détection de la tendance, et ii) une distance d'écart des échos étant déterminée tout autour de la courbe d'approximation.

2.  Procédé selon la revendication 1,
    une nouvelle plage escomptée étant déterminée après chaque courbe d'enveloppe de niveau, nouvellement reçue par l'appareil de mesure de niveau (10).

3.  Procédé selon la revendication 1,
    une nouvelle plage escomptée étant déterminée après n courbes d'enveloppe de niveau nouvellement reçues par l'appareil de mesure de niveau (10), n € IN*.

4.  Procédé selon la revendication 1,
    le procédé comprenant les étapes suivantes :

    balayage d'une courbe d'enveloppe de niveau, reçue à un instant donné par l'appareil de mesure de niveau (10), par un convertisseur analogique - numérique ;
    stockage des échos de la courbe d'enveloppe de niveau balayée sous forme de données, les échos étant respectivement définissables par des paramètres de temps, de lieu et d'amplitude, dans une matrice de taille prédéfinissable ;
    traitement des échos stockés dans la matrice par des méthodes de traitement d'images ;
    recherche d'échos individuels dans les données ainsi stockées ;
    vérification de la possibilité d'association des échos détectés à la plage escomptée ;
    si un écho est associable à la plage escomptée pour le niveau, détermination ainsi d'un niveau ; et
    si la matrice est occupée par des données, détermination d'une nouvelle plage escomptée pour des échos prévisibles à l'avenir.

5.  Procédé selon la revendication 4,
    les échos étant stockés dans la matrice avec les dimensions lieu, temps et amplitude.

6.  Procédé selon la revendication 1,
    la courbe d'approximation étant déterminée à l'aide d'un procédé de régression, d'un procédé d'interpolation polynomiale ou d'un procédé d'approximation.

7.  Procédé selon la revendication 1,
    un multiple de l'écart standard des échos par rapport à la courbe d'approximation étant déterminé en tant que distance d'écart.

8.  Procédé selon la revendication 8,
    selon lequel il est fixé par le multiple de l'écart standard, avec quelle probabilité un écho situé dans le futur dans une plage escomptée peut être effectivement associé à cette plage escomptée.

9.  Procédé selon la revendication 8,
    la modification à un instant donné du niveau étant déterminée à partir de la pente de la courbe d'approximation.

10. Procédé selon la revendication 4,
    la taille de la matrice, dans laquelle est stockée la courbe d'enveloppe de niveau reçue à un instant donné, étant adaptée à la modification à un instant donné du niveau.

11. Dispositif d'évaluation (20) réalisé pour la détermination d'au moins une plage escomptée pour des échos de niveau ou parasites, générés par un appareil de mesure de niveau (10),
    la au moins une plage escomptée étant déterminée à partir d'une fenêtre de temps antérieure, sur la base d'une tendance dans le comportement dans le temps d'au moins deux échos de niveau ou parasites situés dans le passé, la plage escomptée étant une plage spatiale dans une fenêtre de temps située dans le futur, fenêtre dans laquelle sont prévisibles des échos de niveau ou parasites situés dans le futur,

le dispositif d'évaluation (20) présentant une unité de traitement de signaux (28), qui est réalisée pour déterminer la plage escomptée, i) les au moins deux échos de la fenêtre de temps antérieure étant approchés par une courbe d'approximation pour la détection de la tendance, et ii) une distance d'écart des données d'échos étant déterminée tout autour de la courbe d'approximation.

12. Dispositif d'évaluation selon la revendication 11,
le dispositif d'évaluation (20) étant équipé d'une mémoire (26), dans laquelle est stockée dans une matrice de taille prédéfinissable une courbe d'enveloppe de niveau reçue à un instant donné, après une conversion analogique-numérique, avec les dimensions lieu, temps et amplitude.

13. Dispositif d'évaluation selon l'une des revendications 12,
le dispositif d'évaluation (20) comprenant en outre une unité de traitement d'images, qui est réalisée pour traiter les courbes d'enveloppe de niveau mémorisées dans la matrice et y détecter des échos individuels, situés dans ces dernières.

14. Dispositif d'évaluation selon l'une des revendications 13,
le dispositif d'évaluation (20) étant configuré pour vérifier si un écho individuel parmi les échos individuels détectés peut être associé à la plage escomptée et pour déterminer le niveau à partir d'un écho associé à la plage escomptée.

15. Dispositif d'évaluation selon la revendication 14,
le dispositif d'évaluation (20) étant en outre configuré pour déterminer, dès que la matrice est occupée par des données, une nouvelle plage escomptée pour des échos prévisibles à l'avenir.

16. Dispositif d'évaluation selon la revendication 11, l'unité de traitement de signaux (28) étant réalisée pour déterminer la variation des fonctions à l'aide d'un procédé de régression, d'un procédé d'interpolation polynomiale ou d'un procédé d'approximation.

17. Dispositif d'évaluation selon la revendication 11, l'unité de traitement de signaux (28) déterminant, en tant que distance d'écart, un multiple de l'écart standard des données d'écho par rapport à la courbe d'approximation.

18. Dispositif d'évaluation selon la revendication 11,
la taille de la matrice, stockée dans la mémoire (32) de l'unité d'évaluation (20) et dans laquelle est mémorisée la courbe d'enveloppe de niveau reçue à un instant donné, étant adaptable dynamiquement à la variation à un instant donné du niveau, représentée par la pente de la variation des fonctions.

19. Dispositif d'évaluation selon l'une des revendications 11 - 18,
le dispositif d'évaluation (20) étant intégré dans un appareil de mesure de niveau (10).

20. Dispositif d'évaluation selon l'une des revendications 11 - 18,
le dispositif d'évaluation (20) étant intégré dans un appareil de mesure de niveau (10).

21. Dispositif d'évaluation selon l'une des revendications 13 - 20,
le dispositif d'évaluation (20) étant distant d'un appareil de mesure de niveau (10) et étant relié à l'appareil (10) par un circuit de données.

22. Programme d'ordinateur destiné à la détermination d'au moins une plage escomptée pour des données d'échos parasites ou de niveau, générées par un appareil de mesure de niveau à ultrasons ou radar (10),
le programme d'ordinateur présentant des consignes pour déterminer, à partir d'une fenêtre de temps antérieure, la au moins une plage escomptée sur la base d'une tendance dans le comportement dans le temps d'au moins deux échos parasites ou de niveau situés dans le passé,
la plage escomptée étant une plage spatiale dans une fenêtre de temps située dans le futur, dans laquelle sont prévisibles des échos parasites ou de niveau situés à l'avenir, la nouvelle plage escomptée étant déterminée i) les au moins deux échos dans la fenêtre de temps antérieure étant approchés par une courbe d'approximation pour la détection de la tendance, et ii) une distance d'écart des échos étant déterminée tout autour de la courbe d'approximation.

23. Programme d'ordinateur selon la revendication 22,
les étapes de procédé suivantes étant réalisables par les consignes :

balayage d'une courbe d'enveloppe de niveau, reçue à un instant donné par l'appareil de mesure de niveau, par un convertisseur analogique - numérique ;

stockage des échos de la courbe d'enveloppe de niveau balayée sous forme de données, les échos étant respectivement définissables par un paramètre de temps, de lieu ou d'amplitude, dans une matrice au moins bidimensionnelle de taille prédéfinissable ;

traitement des échos stockés dans la matrice par des méthodes de traitement d'images ;

recherche d'échos individuels dans les données ainsi stockées ;

vérification de la possibilité d'association des échos détectés à la plage escomptée ;

si un écho est associable à la plage escomptée pour le niveau, détermination ainsi d'un niveau ; et

si la matrice est occupée de données d'échos, détermination d'une nouvelle plage escomptée pour des échos prévisibles à l'avenir.

24. Produit programme d'ordinateur, comprenant un programme d'ordinateur selon la revendication 22 ou 23 destiné à la détermination d'au moins une plage escomptée pour des échos parasites ou de niveau, générés par un appareil de mesure de niveau à ultrasons ou radar (10), lequel peut être chargé directement dans la mémoire d'un ordinateur, et présente des consignes selon la revendication 22 ou 23, pour réaliser les étapes de procédé suivantes, lorsque le programme est chargé sur un ordinateur.

Fig. 1

Fig. 2

Fig. 3

**Abgetastete Hüllkurve**

EP 1 523 661 B1

Fig. 4

| Kurven-Nr. 543 11.07.2002 14:11:10 | Kurven-Nr. 544 11.07.2002 14:11:25 | Kurven-Nr. 545 11.07.2002 14:11:41 | Kurven-Nr. 546 11.07.2002 14:11:55 | Kurven-Nr. 547 11.07.2002 14:12:11 | Kurven-Nr. 548 11.07.2002 14:12:25 | Kurven-Nr. 549 11.07.2002 14:12:40 | Kurven-Nr. 550 11.07.2002 14:12:55 | Kurven-Nr. 551 11.07.2002 14:13:09 | Kurven-Nr. 552 11.07.2002 14:13:24 |
|---|---|---|---|---|---|---|---|---|---|
| 68 | 68 | 65 | 65 | 64 | 62 | 60 | 62 | 62 | 62 |
| 67 | 67 | 65 | 65 | 63 | 61 | 58 | 62 | 62 | 62 |
| 66 | 67 | 65 | 64 | 62 | 60 | 57 | 61 | 61 | 60 |
| 65 | 65 | 64 | 63 | 61 | 58 | 56 | 59 | 59 | 58 |
| 64 | 64 | 63 | 62 | 60 | 58 | 54 | 58 | 57 | 57 |
| 62 | 62 | 62 | 61 | 58 | 57 | 54 | 57 | 56 | 56 |
| 61 | 61 | 60 | 59 | 57 | 56 | 55 | 56 | 57 | 60 |
| 60 | 60 | 59 | 58 | 57 | 56 | 57 | 60 | 65 | 70 |
| 59 | 59 | 59 | 57 | 57 | 58 | 65 | 69 | 74 | 78 |
| 59 | 59 | 58 | 58 | 63 | 67 | 73 | 77 | 80 | 83 |
| 58 | 58 | 58 | 65 | 71 | 75 | 79 | 82 | 85 | 86 |
| 58 | 64 | 66 | 73 | 77 | 81 | 84 | 85 | 86 | 87 |
| 62 | 72 | 74 | 79 | 82 | 85 | 86 | 87 | 86 | 87 |
| 70 | 78 | 80 | 84 | 85 | 86 | 86 | 86 | 86 | 86 |
| 77 | 82 | 84 | 85 | 85 | 86 | 86 | 86 | 85 | 85 |
| 82 | 84 | 85 | 85 | 85 | 85 | 85 | 85 | 84 | 83 |
| 84 | 85 | 85 | 85 | 85 | 85 | 84 | 84 | 82 | 81 |
| 84 | 85 | 84 | 83 | 83 | 83 | 83 | 82 | 79 | 78 |
| 84 | 84 | 83 | 81 | 82 | 82 | 82 | 81 | 77 | 75 |
| 83 | 83 | 82 | 80 | 81 | 82 | 81 | 80 | 76 | 73 |
| 82 | 82 | 81 | 80 | 81 | 81 | 81 | 79 | 75 | 71 |
| 82 | 81 | 81 | 80 | 81 | 81 | 81 | 79 | 74 | 70 |
| 82 | 81 | 81 | 81 | 81 | 81 | 80 | 78 | 72 | 69 |
| 82 | 81 | 81 | 81 | 81 | 81 | 80 | 77 | 71 | 68 |
| 82 | 81 | 81 | 81 | 81 | 80 | 78 | 76 | 71 | 68 |
| 82 | 81 | 81 | 81 | 80 | 79 | 77 | 75 | 71 | 71 |
| 81 | 80 | 80 | 79 | 79 | 78 | 77 | 75 | 72 | 72 |

Fig. 5

Fig. 6

Zeit

| 0 | 0 | 0 | 0 | 0 | 0 | 0 | 0 | 0 | 0 |
|---|---|---|---|---|---|---|---|---|---|
| 0 | 0 | 0 | 0 | 0 | 0 | 0 | 0 | 0 | 0 |
| 0 | 0 | 0 | 0 | 0 | 0 | 0 | 0 | 9 | 9 |
| 0 | 0 | 0 | 0 | 0 | 0 | 0 | 0 | 16 | 16 |
| 0 | 0 | 0 | 0 | 0 | 0 | 0 | 9 | 21 | 21 |
| 0 | 0 | 0 | 0 | 0 | 0 | 9 | 16 | 24 | 24 |
| 0 | 0 | 0 | 0 | 0 | 0 | 16 | 21 | 25 | 25 |
| 0 | 0 | 0 | 0 | 9 | 9 | 21 | 24 | 24 | 24 |
| 0 | 0 | 9 | 9 | 16 | 16 | 24 | 25 | 21 | 21 |
| 0 | 0 | 16 | 16 | 21 | 21 | 25 | 24 | 16 | 16 |
| 0 | 9 | 21 | 21 | 24 | 24 | 24 | 21 | 9 | 9 |
| 9 | 16 | 24 | 24 | 25 | 25 | 21 | 16 | 0 | 0 |
| 16 | 21 | 25 | 25 | 24 | 24 | 16 | 9 | 0 | 0 |
| 21 | 24 | 24 | 24 | 21 | 21 | 9 | 0 | 0 | 0 |
| 24 | 25 | 21 | 21 | 16 | 16 | 0 | 0 | 0 | 0 |
| 25 | 24 | 16 | 16 | 9 | 9 | 0 | 0 | 0 | 0 |
| 24 | 21 | 9 | 9 | 0 | 0 | 0 | 0 | 0 | 0 |
| 21 | 16 | 0 | 0 | 0 | 0 | 0 | 0 | 0 | 0 |
| 16 | 9 | 0 | 0 | 0 | 0 | 0 | 0 | 0 | 0 |
| 9 | 0 | 0 | 0 | 0 | 0 | 0 | 0 | 0 | 0 |

Ort

Fig. 7

Zeit

| 0 | 0 | 0 | 0 | 0 | 0 | 0 | 0 | 0 | 0 |
|---|---|---|---|---|---|---|---|---|---|
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 25 |
| 0 | 0 | 0 | 0 | 0 | 0 | 0 | 25 | 25 | 0 |
| 0 | 0 | 0 | 0 | 0 | 0 | 0 | 0 | 0 | 0 |
| 0 | 0 | 0 | 0 | 0 | 0 | 25 | 0 | 0 | 0 |
| 0 | 0 | 0 | 0 | 0 | 25 | 0 | 0 | 0 | 0 |
| 0 | 0 | 0 | 0 | 0 | 0 | 0 | 0 | 0 | 0 |
| 0 | 0 | 0 | 25 | 25 | 0 | 0 | 0 | 0 | 0 |
| 0 | 25 | 25 | 0 | 0 | 0 | 0 | 0 | 0 | 0 |
| 0 | 0 | 0 | 0 | 0 | 0 | 0 | 0 | 0 | 0 |
| 25 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |
| 0 | 0 | 0 | 0 | 0 | 0 | 0 | 0 | 0 | 0 |

Ort

Fig. 8

| 65 | 64 |    |    |    |    |    |    |
|    |    | 63 |    | 66 |    |    |    |
|    |    |    | 68 |    | 64 |    | 63 |
|    |    |    |    |    |    | 62 |    |
|    |    |    |    |    |    |    |    |
| 33 |    | 40 |    | 22 | 31 | 32 |    |
|    | 20 |    | 33 |    |    |    | 30 |

**Fig. 9**

| 1 | 1 |   |   |   |   |   |   |
|   |   | 1 |   | 1 |   |   |   |
|   |   |   | 1 |   | 1 |   | 1 |
|   |   |   |   |   |   | 1 |   |
|   |   |   |   |   |   |   |   |
| 2 |   | 2 |   | 2 | 2 | 2 |   |
|   | 2 |   | 2 |   |   |   | 2 |

**Fig. 10**

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4407369 C2
- DE 4223346 A1
- DE 4234300 A1
- EP 0689679 B1
- US 5157639 A
- US 4596144 A

**In der Beschreibung aufgeführte Nicht-Patentliteratur**

- **M. SKOLNIK.** Introduction to Radar Systems. Mc-Graw-Hill, 1980
- **PETER DEVINE.** Radar level measurement - the users guide. VEGA Controlls Ltd, 2000